# EUROPÄISCHE PATENTSCHRIFT

(11) **EP 0 700 742 B1**
(45) Veröffentlichungstag und Bekanntmachung des Hinweises auf die Patenterteilung: **09.12.1998**
(21) Anmeldenummer: 95112367.8
(22) Anmeldetag: 05.08.1995
(51) Int. Cl.: B23B 13/02

(54) **Automatische Werkstoffstangen-Zuführeinrichtung für Werkzeugmaschinen, insbesondere Drehautomaten.**
Automatic bar feeder for tool-machines, in particular for automatic lathes
Embarreur automatique pour machines-outil, en particulier pour tours automatiques

(30) Priorität: 07.09.1994 DE 4431814
(43) Veröffentlichungstag der Anmeldung: 13.03.1996
(73) Patentinhaber: INDEX-WERKE GMBH & CO. KG HAHN & TESSKY, 73730 Esslingen (DE)
(72) Erfinder: Link, Helmut Friedrich, D-73773 Aichwald (DE)
(74) Vertreter: Hoeger, Stellrecht & Partner

(56) Entgegenhaltungen:
- EP-A- 0 570 830
- DE-A- 1 777 170
- GB-A- 2 196 557

## Beschreibung

Automatisch arbeitende Werkzeugmaschinen, insbesondere Drehautomaten, in denen aus einem stangenförmigen Werkstoff Werkstücke hergestellt werden, werden üblicherweise mit einer automatisch arbeitenden Werkstoffstangen-Zuführeinrichtung kombiniert bzw. versehen, welche in der Fachsprache als Stangenlademagazin bezeichnet wird.

Im folgenden soll die vorliegende Erfindung anhand von Drehautomaten erläutert werden, obwohl die Erfindung grundsätzlich auch an anderen Werkzeugmaschinen, wie z. B. Sägemaschinen, eingesetzt werden kann, denen das zu bearbeitende Material in Stangenform zugeführt wird.

In Drehautomaten der in Rede stehenden Art erfolgt bislang das Vorschieben einer gerade in Bearbeitung befindlichen Werkstoffstange, welche in der zugeordneten Werkstoffstangen-Zuführeinrichtung konzentrisch zur Drehachse der arbeitenden Werkstückspindel des Drehautomaten gehalten und geführt wird, jeweils nach dem Bearbeiten bzw. Herstellen eines Werkstücks entweder mittels einer dem Drehautomaten zugeordneten Vorschubeinrichtung oder mittels eines Werkstoffstangenschiebers des Stangenlademagazins. Eine solche Vorschubeinrichtung befindet sich zwischen dem Stangenlademagazin und der Werkstück-Spannstelle der Drehautomaten-Werkstückspindel, wobei diese Spannstelle am vorderen, dem Arbeitsraum des Drehautomaten zugewandten Ende der Werkstückspindel liegt und üblicherweise als sogenannte Spannzange ausgebildet ist. Meist handelt es sich bei der Vorschubeinrichtung um eine Spannzangen-ähnliche Vorschubzange, welche hinter der Werkstück-Spannzange der Werkstückspindel in dieser angeordnet ist. Hingegen handelt es sich bei dem Werkstoffstangenschieber eines Stangenlademagazins um ein Vorschubelement, welches gegen das hintere Ende der sich gerade in Bearbeitung befindlichen und noch im Stangenlademagazin geführten Werkstoffstange anliegt und diese in Richtung auf die Werkstückspindel des Drehautomaten vorschiebt. In beiden Fällen erfolgt ein Vorschub der Werkstoffstange natürlich stets bei geöffneter Spannzange der Werkstückspindel des Drehautomaten.

In Verbindung mit einem automatisch arbeitenden Stangenlademagazin führen die zuerst erwähnten Vorschubeinrichtungen im Vergleich zu Werkstoffstangenschiebern zu gewissen Vorteilen: Die Konstruktion des Stangenlademagazins wird einfacher, weil der Werkstoffstangenschieber mit seinem Antrieb entfallen kann, die Baulänge des Stangenlademagazins wird kleiner, und es ist einfacher, den Durchmesser der die sich gerade in Bearbeitung befindliche Werkstoffstange führenden Führung des Stangenlademagazins an Werkstoffstangen unterschiedlichen Durchmessers anzupassen, weil kein Werkstoffstangenschieber vorhanden ist.

Die vorliegende Erfindung betrifft nun ausschließlich Werkstoffstangen-Zuführeinrichtungen für solche Werkzeugmaschinen, welche über eine eigene Werkstoffstangen-Vorschubeinrichtung verfügen oder denen eine zwischen der eigentlichen Werkzeugmaschine und dem eigentlichen Stangenlademagazin angeordnete Werkstoffstangen-Vorschubeinrichtung zugeordnet ist.

Die DE-PS 1 777 170 beschreibt ein Stangenlademagazin, welches mit einer Einspindel-Drehmaschine kombiniert ist, in deren Werkstückspindel hinter der ein zu bearbeitendes Werkstück haltenden Spannzange eine Vorschubeinrichtung mit einer Vorschubzange angeordnet ist. Das Stangenlademagazin besitzt einen auf einem Gestell angeordneten Führungs- und Aufnahmekasten zur Aufnahme und Führung einer der Drehmaschine zuzuführenden neuen Werkstoffstange, welcher von einer unteren und einer oberen, im Querschnitt jeweils halbschalenförmigen Aufnahmerinne gebildet wird, die zwischen sich einen Längsschlitz freilassen, welcher von einem Einschub-Mitnehmer durchgriffen wird, der an einer sich ebenso wie der Aufnahmekasten in Richtung der Werkstückspindel-Drehachse erstreckenden Antriebskette befestigt ist und gegen das hintere Ende einer neuen, der Drehmaschine zuzuführenden Werkstoffstange angelegt werden kann, um diese durch die Vorschubzange der Werkstückspindel hindurchzudrücken - bei solchen Vorschubzangen handelt es sich üblicherweise um Federzangen, die nicht gespannt und geöffnet werden, sondern nur unter ihrer Federwirkung gegen die Werkstoffstange anliegen. Die obere Aufnahmerinne des Aufnahmekastens wird von einem schwenkbaren Hebel getragen, um so einen von den beiden Aufnahmerinnen gebildeten Führungskanal des Aufnahmekastens öffnen und eine neue Werkstoffstange aus einer einen Vorrat von Werkstoffstangen tragenden Rutsche in die untere Aufnahmerinne rollen lassen zu können.

Wie bei mit einem Stangenlademagazin kombinierten Drehmaschinen üblich, wird eine neue Werkstoffstange durch den Einschuh-Mitnehmer durch die Vorschubzange und die offene Werkstückspannzange der Werkstückspindel hindurch so weit vorgeschoben, daß sie etwas über das vordere Ende der Werkstückspindel hinausragt und in den Bereich eines als sogenannter Abstechmeißel ausgebildeten Drehwerkzeugs gelangt, mit dem das vordere, rohe Ende der neuen Werkstoffstange plangedreht wird, nachdem die Spannzange der Werkstückspindel gespannt und letztere samt neuer Werkstoffstange in Drehung versetzt wurde.

Diese bekannte Konstruktion hat verschiedene Nachteile: Da die beiden Aufnahmerinnen zwischen sich einen für den Durchtritt des Einschub-Mitnehmers offenen Längsschlitz bilden, wird die Stabilität des Führungskanals durch diesen Längsschlitz beeinträchtigt; außerdem unterbricht letzterer bei einem Stangenlademagazin mit einem ölgefluteten Führungskanal den hydrodynamischen Schmier- und Führungs- bzw. Zentriereffekt. Die Verarbeitung schon ursprünglich ungleich langer Werkstoffstangen erfordert eine Meßvorrichtung (auch Einschubsteuerung genannt), die dafür sorgt, daß beim Einschieben einer neuen Werkstoffstange in die Werkstückspindel der Drehmaschine die Werkstoffstange bis zum Abstechmeißel der Drehmaschine gelangt, damit das vordere Stangenende plangedreht werden kann; zu diesem Zweck ist ein Anschlag vorgesehen, der zwischen Stangenlademagazin und Werkstückspindel der Drehmaschine eingefahren und gegen den das vordere Ende der neuen Werkstoffstange vorgeschoben wird, sowie ferner eine über eine Magnetkupplung zuschaltbare Steuerkette, welche nach dem Zurückziehen des Anschlags den Einschubweg der neuen Werkstoffstange bis zum Abstechmeißel vorgibt. Da die Einschubkraft, welche benötigt wird, um die neue Werkstoffstange durch die Vorschubzange der Werkstückspindel hindurchzudrücken, erheblich ist, und da es ferner nicht zulässig ist, die neue Werkstoffstange mit einer solch hohen Nachschubkraft gegen den beweglichen Anschlag zu fahren, muß im Antrieb des Einschub-Mitnehmers eine einstellbare Rutschkupplung vorgesehen werden. Da eine der Drehmaschine zuzuführende neue Werkstoffstange durch den Einschub-Mitnehmer von Anfang an von hinten geschoben wird, muß der von den beiden Aufnahmerinnen gebildete Aufnahmekasten die Länge der längsten, zu verarbeitenden Werkstoffstange aufweisen, um ein Ausknicken der Werkstoffstange unter dem Einfluß der Einschubkraft zu verhindern (sobald eine neue Werkstoffstange in die Werkstückspindel der Drehmaschine eingeschoben wurde, würde hingegen ein um die Werkstückspindellänge kürzerer Führungskanal und damit ein um diese Länge kürzerer Aufnahmekasten ausreichen).

Der Erfindung lag die Aufgabe zugrunde, für eine Werkzeugmaschine, insbesondere einen Drehautomaten, welche über eine eigene Vorschubeinrichtung für das werkstückweise Vorschieben einer in der Werkzeugmaschine zu verarbeitenden Werkstoffstange verfügt oder welcher eine solche Vorschubeinrichtung zugeordnet ist, eine Werkstoffstangen-Zuführeinrichtung zu schaffen, welche die mit einem Einschieben einer neuen Werkstoffstange in die Werkzeugmaschine mittels eines gegen das hintere Werkstoffstangenende anzulegenden Einschubelementes verbundenen Nachteile nicht aufweist.

Die Erfindung geht aus von einer automatischen Einrichtung für das Zuführen von stangenförmigem Werkstoff in Längsrichtung einer Werkstoffstange zu einer Bearbeitungsstation einer Werkzeugmaschine, insbesondere eines Drehautomaten, mit einem von einem Gestell getragenen und sich in Zufuhrrichtung erstreckenden länglichen Aufnahme- und Führungskasten, welcher einen sich gleichfalls in Zufuhrrichtung erstreckenden, mindestens an dem der Bearbeitungsstation zugewandten Ende des Aufnahmekastens offenen Aufnahme- und Führungskanal zum Aufnehmen einer neuen Werkstoffstange sowie zum Führen derselben in Zufuhrrichtung während des werkstückweisen Abarbeitens der Werkstoffstange durch die Werkzeugmaschine aufweist sowie von wenigstens zwei im Querschnitt schalenförmigen Aufnahmerinnen gebildet wird und so in seiner Längsrichtung geteilt ist, mit einer Betätigungsvorrichtung zum Öffnen und Schließen des Aufnahmekastens durch Bewegen mindestens einer Aufnahmerinne quer zur Zufuhrrichtung derart, daß bei geöffnetem Aufnahmekasten diesem in Richtung quer zu seiner Längsrichtung eine neue Werkstoffstange zuführbar ist, sowie mit einer Einschubvorrichtung zum Einschieben einer neuen Werkstoffstange in Zufuhrrichtung in die Werkzeugmaschine.

Zur Lösung der gestellten Aufgabe wird eine solche Einrichtung erfindungsgemäß so ausgebildet, daß dem Aufnahmekasten eine gesteuert schließ- und öffenbare Klemmvorrichtung zum Festlegen einer neuen Materialstange im Aufnahmekasten zugeordnet und der letztere am Gestell in Zufuhrrichtung verschiebbar geführt sowie durch die Einschubvorrichtung in Zufuhrrichtung hin- und herschiebbar ist.

Da bei einem Einsatz der erfindungsgemäßen Werkstoffstangen-Zuführeinrichtung sich der eine neue Werkstoffstange aufnehmende Aufnahmekasten zusammen mit der diese Werkstoffstange im Aufnahmekasten festhaltenden Klemmvorrichtung nach vorn in Richtung auf die Werkzeugmaschine bewegt, können die Aufnahmerinnen einen über seinen ganzen Umfang geschlossenen Führungskanal bilden, so daß letzterer außerordentlich stabil gestaltet werden und sich zwischen einer Werkstoffstange und der Innenwand des Führungskanals ein nicht unterbrochener Ölfilm ausbilden kann, auf dem die nach Beendigung des Einschubvorganges zusammen mit der Werkstückspindel einer Drehmaschine rotierende Werkstoffstange gleiten kann und durch den die Werkstoffstange gegebenenfalls auch genau zentriert wird. Da eine neue Werkstoffstange durch den sich zusammen mit der Klemmvorrichtung nach vorn bewegenden Aufnahmekasten in die Werkzeugmaschine eingeschoben wird, ist es nur erforderlich, eine neue Werkstoffstange so in den geöffneten Aufnahmekasten einzulegen, daß sie über den letzteren genügend weit nach vorne übersteht, um in eine der Werkzeugmaschine zugeordnete Vorschubeinrichtung eingeführt werden zu können. Da die Klemmvorrichtung im Aufnahmekasten selbst, besser aber noch am vorderen Ende des Aufnahmekastens angeordnet werden kann, besteht auch nicht die Gefahr eines Ausknickens einer neuen Werkstoffstange, wenn letztere nach hinten über den Aufnahmekasten übersteht; der letztere kann also kürzer bemessen sein als bei der vorstehend geschilderten bekannten Werkstoffstangen-Zuführeinrichtung. Auch wenn nicht immer gleich lange Werkstoffstangen verarbeitet werden, bedarf es keiner meßvorrichtungsähnlichen Einschubsteuerung, da man, wie sich aus dem folgenden noch ergeben wird, aufs einfachste dafür sorgen kann, daß alle Werkstoffstangen mit bezüglich dem Aufnahmekasten gleich positionierten vorderen Enden in diesen eingelegt werden und so unabhängig von ihrer Gesamtlänge gleich weit über das vordere Ende des Aufnahmekastens überstehen.

Selbstverständlich muß bei der erfindungsgemäßen Werkstoffstangen-Zuführeinrichtung der Aufnahmekasten nicht von nur zwei Aufnahmerinnen gebildet werden, so wie dies bei der Einrichtung nach der DE-PS 1 777 170 der Fall ist - es ist nur erforderlich, daß durch Aufschwenken, Anheben oder dergleichen einer von beispielsweise insgesamt drei Aufnahmerinnen der Führungskanal des Aufnahmekastens so weit freigelegt wird, daß sich eine neue Werkstoffstange von oben oder von der Seite her in diesen Führungskanal einbringen läßt und es infolgedessen nicht erforderlich ist, die neue Werkstoffstange von hinten in den Führungskanal einzuschieben.

Damit sich im Aufnahmekasten Werkstoffstangen mit unterschiedlichem Durchmesser, gegebenenfalls auch mit unterschiedlicher Querschnittsform (wenn die Werkstoffstange beim Abarbeiten nicht rotiert), exakt zentriert halten und führen lassen, ohne daß es dazu eines jeweils anderen Aufnahmekastens bedarf, ist eine vorteilhafte Ausführungsform der erfindungsgemäßen Werkstoffstangen-Zuführeinrichtung so gestaltet, daß der Durchmesser des Kanals des Aufnahmekastens zumindest dem größten, auf der Werkzeugmaschine verarbeitbaren Werkstoffstangendurchmesser entspricht und daß der Kanal mit Haltevorrichtungen für austauschbare, in die Aufnahmerinnen einlegbare, gleichfalls rinnenförmige Reduzierbuchsenelemente ausgestattet ist, wobei jeder Satz von Reduzierbuchsenelementen einen Innendurchmesser definiert, welcher dem Durchmesser der zu verarbeitenden Werkstoffstange entspricht. Die Reduzierbuchsenelemente lassen sich leicht herstellen, exakt an den Durchmesser bzw. die Querschnittsform der zu verarbeitenden Werkstoffstange anpassen sowie schnell und leicht auswechseln.

Grundsätzlich wäre es denkbar, den Aufnahmekasten zum Einführen einer neuen Werkstoffstange in eine Werkzeugmaschine in Abhängigkeit von der Werkstoffstangenlänge unterschiedlich lange Verschiebewege zurücklegen zu lassen; da es aber, wie sich aus dem folgenden noch ergeben wird, ohne weiteres möglich ist, neue Werkstoffstangen stets so in den Aufnahmekasten einzulegen, daß ihr nach vorn über den Aufnahmekasten überstehender Teil immer gleich lang ist, läßt sich die Konstruktion dadurch einfach halten, daß der Aufnahmekasten zwischen einer festen vorderen, der Werkzeugmaschine zugewandten Endstellung und einer festen hinteren Endstellung, in welcher eine neue Werkstoffstange in den Aufnahmekasten eingeführt wird, verschiebbar ist.

Wenn die Werkstoffstange im Führungskanal von einem Ölfilm umgeben wird, ergeben sich bei den hohen Drehzahlen der in der Werkstückspindel der Drehmaschine gespannten Werkstoffstange im Führungskanal hohe hydrodynamische Drücke, welche für die Zentrierung der Werkstoffstange durchaus erwünscht sind, jedoch die Aufnahmerinnen auseinanderzudrücken und infolgedessen den Führungskanal zu öffnen versuchen, so daß dem entgegengewirkt werden muß. Man könnte nun daran denken, die Betätigungsvorrichtung zum Öffnen und Schließen des Führungskanals so zu gestalten, daß sie beim Hin- und Herschieben des Aufnahmekastens zusammen mit diesem hin- und herfährt und eine Zuhaltevorrichtung für den Führungskanal bildet - dies wäre beispielsweise mit einem Druckmittelzylinder möglich. Da der Führungskanal in der hinteren Endstellung des Aufnahmekastens mit einer neuen Werkstoffstange beladen werden soll und hierzu der Führungskanal offen sein muß, andererseits der letztere in der vorderen Endstellung des Aufnahmekastens geschlossen sein muß, damit die Werkstoffstange beim Abarbeiten in der Drehmaschine im Führungskanal zentriert wird, empfiehlt sich eine Ausbildung der erfindungsgemäßen Zuführeinrichtung derart, daß den Aufnahmerinnen wenigstens ein Verriegelungselement zum Geschlossenhalten des Aufnahmekastens zugeordnet ist und daß die Einrichtung mit der vorderen und hinteren Endstellung des Aufnahmekastens zugeordneten vorderen und hinteren Betätigungselementen für das Verriegelungselement versehen ist derart, daß die Aufnahmerinnen beim Erreichen der vorderen Endstellung selbsttätig aneinander verriegelt und bei Erreichen der hinteren Endstellung selbsttätig entriegelt werden, wodurch die Konstruktion der Zuführeinrichtung selbst und deren Steuerung vereinfacht wird.

Wie bereits angedeutet wurde, könnte zum Öffnen des Führungskanals eine der Aufnahmerinnen in irgendeiner Weise quer zur Kanallängsrichtung bewegt werden; besonders einfach wird die Konstruktion jedoch dann, wenn der Aufnahmekasten von zwei, im Querschnitt insbesondere halbschalenförmig gestalteten Aufnahmerinnen gebildet wird, welche an ihren einen Längsseiten über ein Scharnier mit sich in Längsrichtung des Führungskanals erstreckender Gelenkachse gelenkig miteinander verbunden sind, so daß kein besonderes Tragelement für die zum Öffnen des Führungskanals zu bewegende Aufnahmerinne erforderlich ist und ein Geschlossenhalten des Führungskanals vereinfacht wird.

Ein automatisches Verriegeln der Aufnahmerinnen aneinander beim Einlaufen des Aufnahmekastens in seine vordere Endstellung sowie ein automatisches Entriegeln der Aufnahmerinnen beim Einlaufen des Aufnahmekastens in seine hintere Endstellung läßt sich in einfacher Weise dadurch bewerkstelligen und gleichzeitig die Konstruktion besonders einfach gestalten, daß die Aufnahmerinnen an ihren dem Scharnier gegenüberliegenden Längsseiten mit einer Scharnierband-artigen Verriegelungsvorrichtung mit sich in Längsrichtung des Aufnahmekastens erstreckender Achse versehen sind, daß mehrere in Längsrichtung abstandslos hintereinander angeordnete, stabförmige Verriegelungselemente vorgesehen sind, wobei jedem Scharnierband-Element der Verriegelungsvorrichtung ein in diesem längsverschiebbares Verriegelungselement zugeordnet ist, und daß die Betätigungselemente für die Verriegelungsvorrichtung als feste, in Längsrichtung auf die endständigen Verriegelungselemente einwirkende Anschläge ausgebildet sind derart, daß die Stoßstellen der Verriegelungselemente in der hinteren Endstellung des Aufnahmekastens zwischen den Scharnierband-Elementen und in der vorderen Endstellung innerhalb der Scharnierband-Elemente liegen.

Wie bei der bekannten Zuführeinrichtung nach der DE-PS 1 777 170 ist es auch bei der erfindungsgemäßen Einrichtung vorteilhaft, wenn diese ein neben dem Aufnahmekasten anordenbares Werkstoffstangen-Magazin besitzt, welches eine geneigte, in Richtung auf den Aufnahmekasten abfallende Rutsche zum Tragen mehrerer nebeneinander angeordneter und parallel zur Zuführrichtung orientierter Werkstoffstangen aufweist, und wenn außerdem eine Beladevorrichtung zum Einladen der dem Aufnahmekasten jeweils nächsten Werkstoffstange aus der Rutsche in den geöffneten Führungskanal vorgesehen ist, da dann die Mittel zum Beladen des Führungskanals mit einer neuen Werkstoffstange besonders einfach gestaltet werden können.

Da auf der Rutsche des Werkstoffstangen-Magazins die neuen Werkstoffstangen lückenlos nebeneinander liegen, in den offenen Führungskanal aber immer nur eine Werkstoffstange eingeladen werden darf, müssen im Bereich des unteren Endes der Rutsche Werkstoffstangen-Vereinzelungsmittel vorgesehen werden. Diese und die Mittel zum Einladen einer neuen Werkstoffstange in den offenen Führungskanal werden dann besonders einfach, wenn ein Werkstoffstangenanschlag vorgesehen wird, welcher dem dem Aufnahmekasten zugewandten unteren Längsrand der Rutsche zugeordnet ist, und wenn des weiteren wenigstens ein Hubelement zum Anheben der jeweils nächsten Werkstoffstange über diesen Anschlag hinweg in den geöffneten Führungskanal vorgesehen wird. Dieses Hubelement könnte z. B. zangenartig gestaltet sein und von oben an die nächste Werkstoffstange herangefahren werden; einfacher wird die Konstruktion jedoch dann, wenn das Hubelement eine geneigt und in Richtung auf den Aufnahmekasten abfallende Tragfläche für die jeweils nächste Werkstoffstange besitzt und sich diese Tragfläche in der unteren Ruhestellung des Hubelements höchstens auf dem Niveau des unteren Längsrandes der Rutsche und in der oberen Endstellung des Hubelements auf einem solchen Niveau befindet, daß eine sich auf dieser Tragfläche befindliche Werkstoffstange von selbst in den geöffneten Führungskanal rollt und/oder gleitet, denn dann muß das Hubelement nur eine lineare Hubbewegung durchführen und nicht auch noch eine Querbewegung, um die neue Werkstoffstange in den offenen Führungskanal gelangen zu lassen.

Da normalerweise Werkstoffstangen von ursprünglich unterschiedlicher Länge verarbeitet werden, die Steuerung der erfindungsgemäßen Werkstoffstangen-Zuführeinrichtung dann jedoch besonders einfach wird, wenn eine neue Werkstoffstange immer gleich weit über das vordere Ende des Aufnahmekastens hinausragt, bis diese Werkstoffstange in die Werkzeugmaschine eingeführt ist, empfiehlt sich eine Ausführungsform der erfindungsgemäßen Werkstoffstangen-Zuführeinrichtung, bei der der in Zuführrichtung vordere Rand der Rutsche, welcher insbesondere einen Anschlag für die vorderen Werkstoffstangenenden bildet, vom vorderen Ende des sich in seiner hinteren Endstellung befindlichen Aufnahmekastens, in Zufuhrrichtung gemessen, einen solchen Abstand aufweist, welcher dem für ein Einführen einer neuen Werkstoffstange in die Bearbeitungsstation der Werkzeugmaschine durch Vorschieben des Aufnahmekastens in seine vordere Endstellung erforderlichen Überstand der Werkstoffstange über das vordere Ende des Aufnahmekastens entspricht, denn dann ist auch bei ursprünglich unterschiedlich langen Werkstoffstangen gewährleistet, daß durch Verschieben des Aufnahmekastens von seiner hinteren Endstellung, in der er mit einer neuen Werkstoffstange beladen wurde, in seine vordere Endstellung das vordere Ende der neuen Werkstoffstange in die der Werkzeugmaschine zugeordnete Vorschubeinrichtung eingeführt wird, die ja dafür sorgen muß, daß beim Abarbeiten der Werkstoffstange diese werkstückweise vorgeschoben wird.

Da die zusammen mit dem Aufnahmekasten hin- und herfahrende Klemmvorrichtung nur dafür sorgen muß, daß eine neue, sich im Führungskanal befindliche Werkstoffstange beim Vorschieben des Aufnahmekastens in die genannte Vorschubeinrichtung gelangt, könnte die Klemmvorrichtung irgendwo im Bereich des Führungskanals, unmittelbar hinter diesem oder vor dem vorderen Ende des Führungskanals angeordnet sein. Damit aber auch Werkstoffstangen verarbeitet werden können, welche nicht hinten über den Aufnahmekasten überstehen, sowie zur Erzielung einer möglichst einfachen Konstruktion empfiehlt es sich jedoch, die Klemmvorrichtung vor dem Aufnahmekasten anzuordnen, und zwar insbesondere unmittelbar vor dem vorderen Ende des Führungskanals.

Wie sich aus dem folgenden noch ergeben wird, ergibt sich bei Ausführungsformen mit über ein Scharnier aneinander angelenkten Aufnahmerinnen eine besonders einfache Konstruktion dann, wenn die Klemmvorrichtung als Klemmzange mit zwei miteinander gelenkig verbundenen Zangenschenkeln ausgebildet ist, obwohl die Klemmvorrichtung natürlich auch die Gestalt einer üblichen, buchsenartigen Spannzange haben oder z. B. von zwei querbeweglichen Klemmbacken gebildet werden könnte.

Auch sei vorsorglich darauf hingewiesen, daß die Klemmvorrichtung nur bei bevorzugten Ausführungsformen zusammen mit dem Aufnahmekasten über den gesamten Verschiebeweg des letzteren hin- und herschiebbar ist, denn grundsätzlich wird die Klemmvorrichtung ja nur für diejenige Verschiebung des Aufnahmekastens benötigt, durch die die neue Werkstoffstange in die erwähnte Vorschubeinrichtung eingeschoben wird.

Bei besonders vorteilhaften Ausführungsformen der erfindungsgemäßen Werkstoffstangen-Zuführeinrichtung fluchtet die Gelenkachse der um letztere schwenkbaren Zangenschenkel der Klemmzange mit der Gelenkachse des die Aufnahmerinnen verbindenden Scharniers, denn dann ist es besonders einfach, mit ein und derselben Betätigungsvorrichtung sowohl den Aufnahmekasten zu öffnen und zu schließen, als auch die Klemmzange zu betätigen, obwohl es auch bei Einsatz einer anderen Klemmvorrichtung von Vorteil ist, wenn diese durch die Betätigungsvorrichtung zum Öffnen und Schließen des Aufnahmekastens betätigbar ist. Für die genannten bevorzugten Ausführungsformen empfiehlt es sich auch, diese so auszubilden, daß eine Gelenkstange des Scharniers der Aufnahmerinnen die Klemmzange trägt und deren Gelenkachse bildet, denn dann benötigt man keine besonderen Haltemittel für die Klemmzange.

Da, wie bereits erwähnt, die Klemmvorrichtung nur dann in Funktion zu treten braucht, wenn der Aufnahmekasten das vordere Ende einer neuen Werkstoffstange in die Vorschubeinrichtung einschiebt, empfiehlt es sich für Ausführungsformen mit einer Klemmzange als Klemmvorrichtung, welche durch die Vorrichtung zum Öffnen und Schließen des Aufnahmekastens betätigt wird, jeden der Zangenschenkel der Klemmzange mit jeweils einer der Aufnahmerinnen über eine in beiden Schwenkrichtungen spielbehaftete mechanische Koppelvorrichtung zu koppeln; dadurch läßt sich nämlich am einfachsten gewährleisten, daß in der hinteren Endstellung des Aufnahmekastens nicht nur dessen Führungskanal dicht geschlossen wird, sondern die Klemmzange die neue Werkstoffstange auch fest erfaßt, und daß nach dem Einschieben des vorderen Endes der neuen Werkstoffstange in die Vorschubeinrichtung letztere die Werkstoffstange werkstückweise vorschieben und die Werkstoffstange im Führungskanal rotieren kann, wozu die Klemmzange die Werkstoffstange freigeben muß, ohne daß der Führungskanal geöffnet wird, da letzterer ja während des Abarbeitens der Werkstoffstange diese führen und zentrieren soll. Diese Funktionen lassen sich am einfachsten dadurch sicherstellen, daß man die Betätigungsvorrichtung zum Öffnen und Schließen des Führungskanals an der Klemmzange angreifen läßt. In diesem Fall ergibt sich die einfachste Konstruktion dann, wenn die Betätigungsvorrichtung von der Klemmzange getragen wird, weil dann keine besonderen Haltemittel für die Betätigungsvorrichtung und auch keine Bewegungsübertragungsmittel zwischen Betätigungsvorrichtung und Klemmzange erforderlich sind. Im Hinblick auf die Erzielung einer möglichst einfachen Konstruktion empfiehlt es sich in diesem Fall, die Betätigungsvorrichtung als Druckmittelzylinder auszubilden, dessen Kolbenstange mit dem einen Zangenschenkel und dessen Zylinder mit dem anderen Zangenschenkel gelenkig verbunden ist.

Das Grundkonzept der vorliegenden Erfindung läßt sich nicht nur bei Werkzeugmaschinen mit nur einer einzigen Bearbeitungsstation anwenden, d. h. insbesondere bei EinspindelDrehautomaten, sondern die Erfindung ist auch für einen Mehrspindel-Drehautomaten geeignet, der eine um eine zentrale Schaltachse drehbare, mehrere zur Schaltachse parallele Werkstückspindeln tragende Arbeitsspindeltrommel aufweist, welche durch Drehen um die Schaltachse in eine der Zahl der Werkstückspindeln entsprechende Anzahl von Schaltpositionen einstellbar ist (derartige Mehrspindel-Drehautomaten, die sich für eine Kombination mit der erfindungsgemäßen Zuführeinrichtung eignen, lassen sich z. B. der DE-PS 38 44 337 bzw. der US-PS 5 062 330 entnehmen). In einem solchen Fall muß nämlich nur ein das vorstehend erwähnte Gestell bildender, zusammen mit den Werkstückspindeln um die Schaltachse drehbarer Werkstoffstangenträger vorgesehen werden, der für jede Werkstückspindel einen Aufnahmekasten trägt, dessen Kanal mit der ihm zugeordneten Werkstückspindel fluchtet. Dabei wird die Konstruktion besonders einfach, wenn kein gesonderter Werkstoffstangenträger vorgesehen wird, sondern vielmehr die Arbeitsspindeltrommel den Werkstoffstangenträger bildet und die Aufnahmekästen trägt.

Die Anwendung der vorliegenden Erfindung auf einen Mehrspindel-Drehautomaten macht es auch nicht erforderlich, eines, mehrere oder alle der aktiven Elemente der erfindungsgemäßen Werkstoffstangen-Zuführeinrichtung zu vervielfachen, d. h. z. B. bei einem Drehautomaten mit sechs Werkstückspindeln sechsfach vorzusehen.

Bei einer bevorzugten Ausführungsform für einen MehrspindelDrehautomaten ist nur eine einzige, vom Werkstoffstangenträger getrennte Betätigungsvorrichtung zum Öffnen und Schließen aller Aufnahmekästen vorgesehen und einer ersten Aufnahmekasten-Postion zugeordnet, welche einer der Schaltpositionen der Arbeitsspindeltrommel bzw. des Werkstoffstangenträgers entspricht.

In gleicher Weise empfiehlt es sich, nur ein einziges, vom Werkstoffstangenträger getrenntes Werkstoffstangen-Magazin vorzusehen und der ersten Aufnahmekasten-Position zuzuordnen.

Auch ist es vorteilhaft, nur eine einzige, vom Werkstoffstangenträger getrennte Klemmvorrichtung vorzusehen und einer Aufnahmekasten-Position zuzuordnen, welche einer der Schaltpositionen entspricht. Um in einem solchen Fall die bearbeitungsunwirksamen Nebenzeiten des Drehautomaten möglichst klein zu halten, ist bei besonders vorteilhaften Ausführungsformen die Klemmvorrichtung der in Schaltrichtung der Arbeitsspindeltrommel auf die vorstehend erwähnte erste Aufnahmekasten-Position folgenden (zweiten) AufnahmekastenPosition zugeordnet, obwohl die Klemmvorrichtung grundsätzlich auch der übernächsten etc. Aufnahmekasten-Position zugeordnet sein könnte.

Bei Konstruktionen mit nur einer einzigen Klemmvorrichtung ist es des weiteren von Vorteil, wenn nur eine einzige, vom Werkstoffstangenträger getrennte und nacheinander mit jedem der Aufnahmekästen in Richtung der Schaltachse kuppelbare Einschubvorrichtung vorgesehen wird, welche der der Klemmvorrichtung zugeordneten Aufnahmekasten-Position zugeordnet ist.

Die Konstruktion wird dabei besonders einfach, wenn alle nur einmal vorhandenen aktiven Elemente der erfindungsgemäßen Werkstoffstangen-Zuführeinrichtung außerhalb der Bewegungsbahnen der mit dem Werkstoffstangenträger um die Schaltachse drehbaren Teile angeordnet sind bzw. sich so bewegen lassen, daß sie außerhalb dieser Bewegungsbahnen liegen und dann ein Weiterschalten des Werkstoffstangenträgers bzw. der Arbeitsspindeltrommel nicht behindern können.

Weitere vorteilhafte Merkmale der in Verbindung mit einem Mehrspindel-Drehautomaten einsetzbaren erfindungsgemäßen Werkstoffstangen-Zuführeinrichtung lassen sich den beigefügten Ansprüchen 31 - 37 entnehmen.

Weitere Merkmale, Vorteile und Einzelheiten der Erfindung ergeben sich aus der nachfolgenden Beschreibung sowie der beigefügten zeichnerischen Darstellung zweier Ausführungsformen der erfindungsgemäßen Werkstoffstangen-Zuführeinrichtung, wobei die eine für einen Einspindel-Drehautomaten und die andere für einen Mehrspindel-Drehautomaten vorgesehen ist; in der Zeichnung zeigen:
- Fig. 1: die erste Ausführungsform der Werkstoffstangen-Zuführeinrichtung samt Teilen eines Einspindel-Drehautomaten, mit dem die Zuführeinrichtung kombiniert ist, und zwar teilweise in einer Draufsicht und teilweise in einem Schnitt entsprechend der Linie 1-1 in Fig. 2;
- Fig. 2: einen Schnitt durch Teile dieser ersten Ausführungsform der Werkstoffstangen-Zuführeinrichtung gemäß der Linie 2-2 in Fig. 1;
- Fig. 3: einen Schnitt durch die Klemmvorrichtung der ersten Ausführungsform gemäß der Linie 3-3 in Fig. 1;
- Fig. 4: einen Schnitt durch Teile einer zweiten Ausführungsform der erfindungsgemäßen Werkstoffstangen-Zuführeinrichtung, welche mit einem Mehrspindel-Drehautomaten zusammenarbeiten kann, und zwar einen Schnitt senkrecht zur Schaltachse der Arbeitsspindeltrommel dieses Mehrspindel-Drehautomaten, und
- Fig. 5: eine der Fig. 1 entsprechende Darstellung der zweiten Ausführungsform samt Teilen eines mit ihr kombinierten Mehrspindel-Drehautomaten.

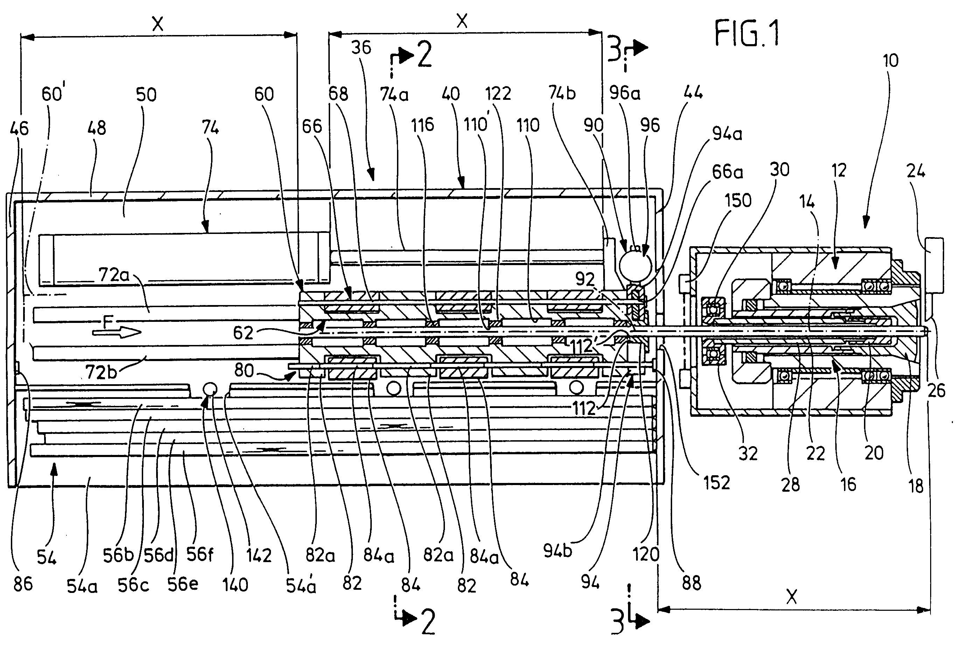

Die Fig. 1 zeigt Teile eines Einspindel-Drehautomaten 10, nämlich unter anderem einen Spindelkasten 12 dieses Drehautomaten, in dem eine um eine Drehachse 14 drehbare und axial unverschiebbare Werkstückspindel 16 gelagert ist. Letztere läßt sich durch nicht dargestellte Mittel in Rotation versetzen, ist als Hohlwelle ausgebildet, an ihrem vorderen Ende mit einer konventionellen Werkstück-Spannzange 18 versehen und nimmt eine gleichfalls konventionelle Vorschubzange 20 auf, die sich entgegen einer ihr eigenen Federwirkung aufweiten läßt und unter dieser Federwirkung gegen den Umfang einer bei dem in Fig. 1 dargestellten Zustand soeben in den Drehautomaten 10 eingeschobenen neuen Werkstoffstange 22 anliegt und so diese in Richtung der Drehachse 14 nach vorn (gemäß Fig. 1 nach rechts) vorschieben kann. Die Vorschubzange 20 bildet also einen Teil der vorstehend erwähnten Vorschubeinrichtung und kann durch in Fig. 1 nur teilweise dargestellte, jedoch konventionelle Antriebsmittel in Richtung der Drehachse 14 hin- und hergeschoben werden. Für das radiale Öffnen und Schließen der Spannzange 18 sind gleichfalls nicht dargestellte, jedoch konventionelle Betätigungsmittel vorgesehen, so daß die Vorschubzange 20 bei geöffneter Spannzange 18 die Werkstoffstange 22 werkstückweise vorschieben kann, während die Spannzange 18 die Werkstoffstange festhält, wenn die Vorschubzange 20 zurückgezogen, d. h. gemäß Fig. 1 nach links bewegt wird und dabei über den Werkstoffstangenumfang gleitet.

Der Drehautomat 10 besitzt ferner vor der Werkstückspindel 16, d. h. im Arbeitsraum der Drehmaschine, einen Werkzeugschlitten 24, welcher mindestens quer zur Drehachse 14 verschiebbar ist und ein Drehwerkzeug 26 trägt, bei dem es sich um einen sogenannten Abstechmeißel handeln soll, mit dessen Hilfe zum einen das rohe, vordere Ende einer in den Drehautomaten neu eingeschobenen Werkstoffstange plangedreht werden kann und mit dem sich zum anderen gegebenenfalls auch ein durch den Drehautomaten fertigbearbeitetes Werkstück von der Werkstoffstange abstechen, d. h. abtrennen läßt (natürlich immer bei rotierender Werkstückspindel 16 und in letzterer mit Hilfe der Spannzange 18 gespannter und damit sich mit der Werkstückspindel drehender Werkstoffstange 22).

Von den Antriebsmitteln für die Vorschubzange 20 läßt die Fig. 1 ein zur Drehachse 14 konzentrisches Vorschubrohr 28 erkennen, an dem die Vorschubzange angebracht ist und welches sich bei angetriebener Werkstückspindel 16 zusammen mit dieser dreht, ferner ein das hintere Ende des Vorschubrohres 28 haltendes Kugellager 30 und einen das letztere umfassenden und haltenden Vorschubring 32, welcher z. B. mittels eines Druckmittelzylinders in Richtung der Drehachse 14 hin- und herbewegt werden kann.

Der Drehautomat 10 und insbesondere seine vorstehend beschriebenen Bestandteile sind konventionell ausgebildet und dem Fachmann bekannt, so daß es sich erforderlich ist, diese Teile noch näher zu beschreiben oder zeichnerisch darzustellen.

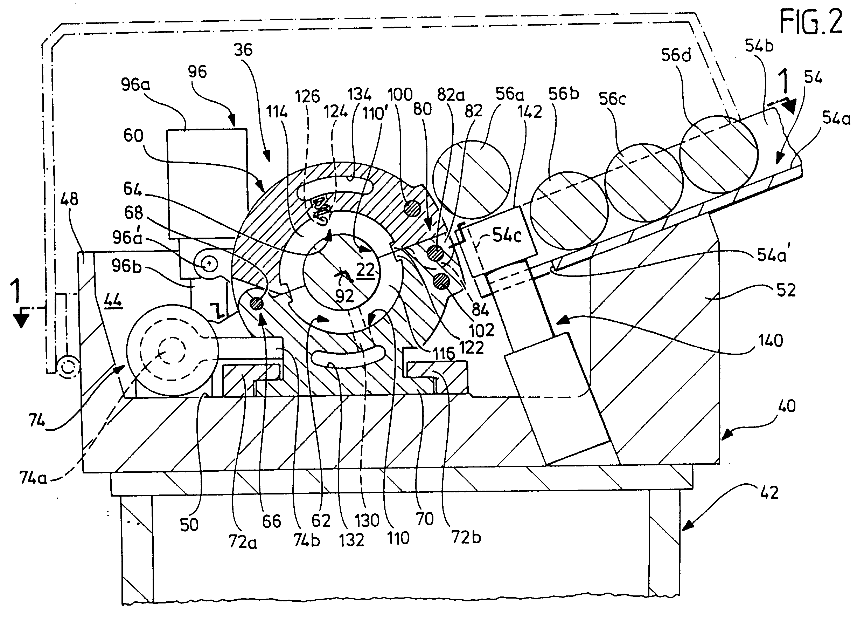

Die mit dem Drehautomaten 10 zusammenwirkende erste Ausführungsform der erfindungsgemäßen Werkstoffstangen-Zuführeinrichtung ist in Fig. 1 als Ganzes mit 36 bezeichnet worden. Wie die Fig. 1 in Verbindung mit Fig. 2 erkennen läßt, besitzt die Zuführeinrichtung 36 einen wannenartigen Träger 40, der im Sinne der vorstehenden Erfindungsdefinition und der beigefügten Ansprüche das Gestell bildet, so daß er im folgenden als Gestell 40 bezeichnet werden soll; letzteres ist bei der ersten Ausführungsform nach den Figuren 1 - 3 auf einem Traggestell 42 angeordnet.

Für das Folgende soll als Zufuhrrichtung (siehe Pfeil "F" in Fig. 1) diejenige Richtung definiert werden, die mit der Richtung der Drehachse 14 zusammenfällt und gemäß Fig. 1 nach rechts weist.

Im Sinne dieser Definition besitzt das wannenförmige Gestell 40 eine vordere Stirnwand 44, eine hintere Stirnwand (oder Rückwand) 46 und eine hintere Längsseitenwand 48, wobei es für die Funktion dieser Ausführungsform gegebenenfalls nur darauf ankommt, daß die vom Drehautomaten 10 abgewandte Innenfläche der vorderen Stirnwand 44 senkrecht zur Drehachse 14 verläuft. Ein Boden des wannenförmigen Gestells 40 wurde mit 50 bezeichnet (siehe auch Fig. 2), und eine nur in Fig. 2 erkennbare vordere Längsseitenwand mit 52. Auf dieser ist eine als Rutsche 54 ausgebildete Vorratsfläche für neue Werkstoffstangen 56a, 56b, 56c, 56d etc. befestigt, welche in den beigefügten Zeichnungen mit einem kreisrunden Querschnitt dargestellt wurden, obwohl grundsätzlich in einer Drehmaschine auch Werkstoffstangen mit anderen Querschnittsformen verarbeitet werden können, auch wenn dies relativ unüblich ist. Wenn die Rutsche 54 (wie bei der in Fig. 2 dargestellten Ausführungsform) außer einem geneigten und die eigentliche Vorratsfläche für die Werkstoffstangen bildenden Boden 54a auch noch eine dem Drehautomaten 10 zugewandte vordere Stirnwand 54b besitzt (was bei der in Fig. 1 dargestellten Variante nicht der Fall ist), kann die Stirnwand 54b die im folgenden noch zu schildernde Funktion als Anschlag für die vorderen Werkstoffstangenenden übernehmen, wobei es dann erforderlich ist, daß die vom Drehautomaten 10 abgewandte Innenfläche der Stirnwand 54b senkrecht zur Drehachse 14 verläuft - in diesem Fall kann die vordere Stirnwand 44 des wannenförmigen Gestells 40 entfallen oder gegenüber der Drehachse 14 in beliebiger Weise geneigt sein.

Auf dem Boden 50 des Gestells 40 ist ein Aufnahmekasten 60 in Richtung der Drehachse 14 bzw. parallel zur Zufuhrrichtung F verschiebbar geführt. Er besteht im wesentlichen aus zwei im Querschnitt halbschalenförmigen Aufnahmerinnen, und zwar aus einer unteren Aufnahmerinne 62 und einer oberen Aufnahmerinne 64, welche über ein Scharnier 66, dessen Schwenkachse mit 68 bezeichnet wurde, gelenkig miteinander verbunden sind. Die untere Aufnahmerinne 62 ist mit einem im Querschnitt ungefähr T-förmigen Fuß 70 versehen, welcher auf dem Boden 50 gleitet und mittels im Querschnitt ungefähr L-förmigen und am Boden 50 befestigten Längsführungsschienen 72a und 72b in Richtung der Drehachse 14 bzw. der Zufuhrrichtung F am Gestell 40 längsverschiebbar geführt wird. Auf dem Gestellboden 50 ist ferner ein als Hydraulikzylinder ausgebildeter Einschubzylinder 74 befestigt, und zwar mit zur Drehachse 14 bzw. Vorschubrichtung F paralleler Zylinderachse, an dessen Kolbenstange 74a ein mit dem Fuß 70 verbundener Ausleger 74b befestigt ist. Mit Hilfe des Einschubzylinders 74 läßt sich der Aufnahmekasten 60 also in Richtung der Drehachse 14 hin- und herschieben, und zwar zwischen einer in Fig. 1 dargestellten vorderen Endstellung und einer in Fig. 1 bei 60' strichpunktiert angedeuteten hinteren Endstellung.

An ihren dem Scharnier 66 gegenüberliegenden Längsseiten sind die beiden Aufnahmerinnen 62 und 64 mit einer Scharnierbandartigen Verriegelungsvorrichtung 80 versehen, welche von in Längsrichtung hintereinander angeordneten und abwechselnd an der unteren und oberen Aufnahmerinne 62 bzw. 64 angebrachten buchsenartigen Scharnierelementen 82 bzw. 84 sowie von abstandslos hintereinander angeordneten Verriegelungsstäben 82a und 84a gebildet wird, wobei die Verriegelungsstäbe 82a den Scharnierelementen 82 und die Verriegelungsstäbe 84a den Scharnierelementen 84 zugeordnet sind. Vorteilhaft ist es, wenn sich zwischen in Längsrichtung aufeinanderfolgenden Scharnierelementen 82 und 84 jeweils ein kleiner Zwischenraum befindet, weil dann die Entriegelung der Verriegelungsvorrichtung 80 nicht bedingt, daß die Verriegelungsstäbe in Längsrichtung relativ zum Aufnahmekasten 80 ganz exakt positioniert sind - dies wird aus dem folgenden noch im einzelnen verständlich werden. Bis auf den länger gestalteten vordersten Verriegelungsstab 82a entspricht die Länge eines jeden der Verriegelungsstäbe 82a, 84a der Länge des zugeordneten Scharnierelements 82, 84. Bei der in Fig. 1 dargestellten Position der Verriegelungsstäbe 82a, 84a ist die Verriegelungsvorrichtung 80 verriegelt, d. h. sind die Aufnahmerinnen 62 und 64 aneinander verriegelt und der Aufnahmekasten 60 gegen ein Öffnen gesichert. Werden die Verriegelungsstäbe 82a, 84a jedoch aus ihren in Fig. 1 gezeigten Positionen heraus so weit nach rechts verschoben, daß ihre Stoßstellen zwischen den Scharnierelementen 82 und 84 liegen, kann die obere Aufnahmerinne 64 um die Scharnierachse 68 nach oben geschwenkt werden.

An der hinteren Stirnwand 46 des wannenförmigen Gestells 40 ist ein hinterer Anschlag 86 fest angebracht, an der vorderen Stirnwand 44 ein vorderer Anschlag 88, und zwar jeweils in einer solchen Position, daß der hintere Verriegelungsstab 82a auf den Anschlag 86 aufläuft, wenn der Aufnahmekasten 60 in seine hintere Endstellung einläuft, und daß der vordere Verriegelungsstab 82a auf den vorderen Anschlag 88 aufläuft, wenn der Aufnahmekasten 60 in seine vordere Endstellung einläuft, wobei der vordere und der hintere Verriegelungsstab jeweils so lang bemessen ist bzw. die Anschläge 86 und 88 in Richtung der Drehachse 14 so positioniert sind, daß die Verriegelungsvorrichtung 80 in der hinteren Endstellung des Aufnahmekastens 60 entriegelt und in der vorderen Endstellung des Aufnahmekastens verriegelt ist (letzteres so, wie dies die Fig. 1 erkennen läßt).

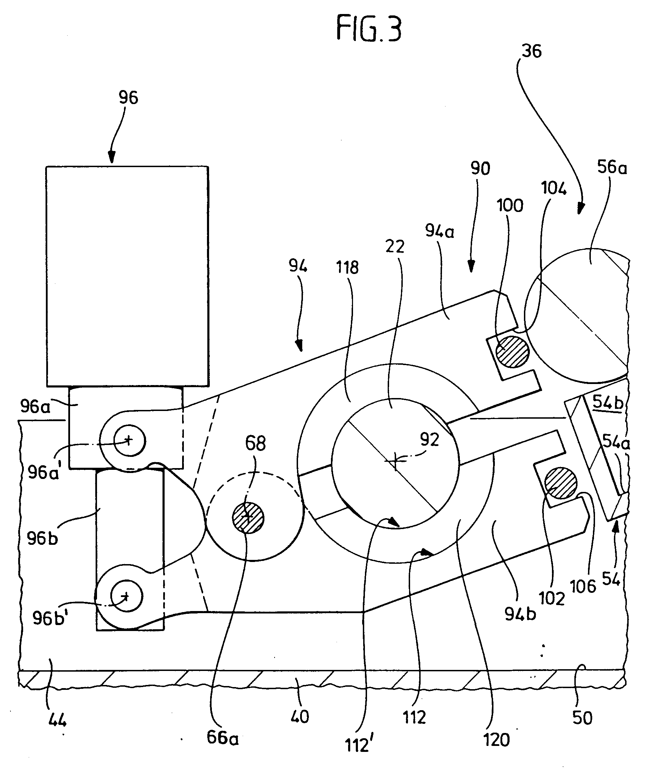

Das Scharnier 66 hat eine durchgehende Gelenkstange 66a, welche sich nach vorn über den Aufnahmekasten 60 hinauserstreckt und mit dem überstehenden Teil eine Klemmvorrichtung 90 trägt. Diese soll nun anhand der Fig. 3 näher erläutert werden.

Die Gelenkstange 66a und damit die Schwenkachse 68 verlaufen parallel zu einer auch in Fig. 1 angedeuteten Achse 92 der Zuführeinrichtung 36, wobei die Achse 92, wenn die Zuführeinrichtung 36 mit dem Drehautomaten 10 kombiniert ist, mit dessen Drehachse 14 fluchtet. Die Klemmvorrichtung 90 umfaßt eine Klemmzange 94 mit einem oberen und einem unteren Zangenschenkel 94a bzw. 94b, welche über die Gelenkstange 66a gelenkig miteinander verbunden sind und infolgedessen um die Schwenkachse 68 verschwenkt werden können. Des weiteren weist die Klemmvorrichtung 90 einen Druckmittelzylinder 96 auf, der die Klemmzange 94 betätigt und von dieser auch getragen wird, und zwar dadurch, daß ein Zylindergehäuse 96a des Druckmittelzylinders 96 am oberen Zangenschenkel 94a und eine Kolbenstange 96b des Druckmittelzylinders am unteren Zangenschenkel 94b angelenkt ist, wobei die zur Achse 92 parallelen Gelenkachsen der Anlenkstellen mit 96a' bzw. 96b' bezeichnet wurden. Mit dem Druckmittelzylinder 96 läßt sich aber auch der Aufnahmekasten 60 aufklappen: Zu diesem Zweck sind eine obere und eine untere Koppelstange 100 bzw. 102 vorgesehen (siehe die Figuren 2 und 3), welche parallel zueinander und parallel zur Achse 92 der Zuführeinrichtung verlaufen, in der oberen Aufnahmerinne 64 bzw. in der unteren Aufnahmerinne 62 festgelegt sind und mit Querspiel in Nuten (es könnte sich auch um axiale Öffnungen handeln) 104 bzw. 106 der beiden Zangenschenkel eingreifen. Der Sinn dieses Querspiels wird sich aus dem folgenden noch ergeben. Durch die Koppelstangen wird auch verhindert, daß sich die gesamte Klemmvorrichtung 90 um die Gelenkstange 66a drehen kann.

Wenn immer nur Werkstoffstangen gleichen Durchmessers bzw. gleicher Querschnittsform verarbeitet werden würden, wäre es ausreichend, wenn der Aufnahmekasten 60 mit seinen beiden Aufnahmerinnen 62, 64 einen vorn und hinten offenen Führungskanal 110 bilden würde (bei Verarbeitung kürzerer Werkstoffstangen könnte der Führungskanal hinten auch geschlossen sein) und die beiden Zangenschenkel 94a, 94b eine entsprechende Durchtrittsöffnung 112 bilden würden. Die dargestellte Ausführungsform der erfindungsgemäßen Zuführeinrichtung ist aber so gestaltet, daß sie die Verarbeitung von Werkstoffstangen unterschiedlichen Durchmessers ermöglicht und für einen anderen Werkstoffstangendurchmesser leicht und kostengünstig umgerüstet werden kann. Zu diesem Zweck sind austauschbare, im Querschnitt halbschalenförmige Reduzierbuchsenelemente vorgesehen, und zwar ein Reduzierbuchsenelement 114 für die obere Aufnahmerinne 64, ein Reduzierbuchsenelement 116 für die untere Aufnahmerinne 62, ein Reduzierbuchsenelement 118 für den oberen Zangenschenkel 94a und ein Reduzierbuchsenelement 120 für den unteren Zangenschenkel 94b. Die Reduzierbuchsenelemente 114 und 116 werden durch an die Aufnahmerinnen 62 und 64 angeformte, in den Führungskanal 110 vorspringende Nasen 122 an einem Verdrehen und durch geeignete Sicherungselemente an einem Verschieben in axialer Richtung gehindert, wobei die Fig. 2 ein solches Sicherungselement in Form einer gefederten Rastkugel 124 und einer Ansenkung 126 erkennen läßt, während entsprechende Sicherungselemente für die Reduzierbuchsenelemente 118 und 120 der Klemmzange 94 der Einfachheit halber nicht dargestellt wurden (die Reduzierbuchsenelemente könnten z. B. mittels von außen eingeschraubter Schrauben gehalten werden, für die in den Reduzierbuchsenelementen als Sacklöcher gestaltete Gewindebohrungen vorgesehen sein können).

Auf diese Weise läßt sich der Aufnahmekasten 60 mit einem vorn und hinten offenen Führungskanal 110' mit wählbarem Durchmesser versehen, die Klemmzange 94 mit einer Durchtrittsöffnung 112' mit gleichfalls wählbarem Durchmesser.

Jedes der Reduzierbuchsenelemente 114 und 116 sowie jede der Aufnahmerinnen 64, 62 ist mit einer Schmierölbohrung 130 versehen (in Fig. 2 wurden nur die miteinander fluchtenden Schmierölbohrungen 130 im unteren Reduzierbuchsenelement 116 und in der unteren Aufnahmerinne 62 dargestellt), um für eine Ausbildung eines Schmierölfilmes zwischen einer im Führungskanal 110' rotierenden Werkstoffstange und der Wand des Führungskanals zu sorgen; hierzu weisen die Aufnahmerinnen 62 und 64 jeweils einen in Längsrichtung verlaufenden Schmierölkanal 132 bzw. 134 auf, in den die Schmierölbohrungen 130 münden. Vorn und hinten aus dem Führungskanal 110' austretendes Schmieröl kann von der vom Gestell 40 gebildeten Wanne aufgefangen und durch geeignete Mittel in die Schmierölkanäle 132, 134 zurückgeführt werden.

Wie die Figuren 1 und 2 erkennen lassen, sind längs des Wegs des Aufnahmekastens 60 auf derjenigen Seite des Aufnahmekastens, an der die Verriegelungsvorrichtung 80 vorgesehen ist, neben dem Weg des Aufnahmekastens mehrere Hubzylinder 140 angeordnet, die im Gestell 40 befestigt sind, deren Kolbenstangen sich senkrecht zum Boden 54a der Rutsche 54 ausfahren lassen und oben zum Boden 54a parallele, d. h. entsprechend geneigte Tragflächen 142 bilden, welche in der unteren Endstellung der Kolbenstangen, die durch entsprechende Öffnungen 54a' im Rutschenboden 54a hindurchgreifen können, mit der Oberseite des Bodens 54a fluchten und durch Ausfahren der Kolbenstangen auf ein Niveau gebracht werden können, in dem sie mit der Oberkante des gemäß Fig. 2 rechten Randes der unteren Aufnahmerinne 62 zumindest fluchten. Außerdem sind erfindungsgemäß die Hubzylinder 140 so angeordnet und ihre Tragflächen 142 so bemessen, daß mit den letzteren jeweils nur eine Werkstoffstange angehoben wird, nämlich die dem Aufnahmekasten 60 jeweils nächstliegende der auf der Rutsche 54 bevorrateten Werkstoffstangen, in Fig. 2 also die Werkstoffstange 56a. Außerdem verhindern die Hubzylinder 140 beim Anheben dieser Werkstoffstange mit Hilfe ihrer Kolbenstangen ein Nachrollen der Werkstoffstangen 56b, 56c etc.

Schließlich zeigt die Fig. 1 noch eine Lichtschranke 150, die bei der dargestellten Ausführungsform zwar am Drehautomaten 10 angebracht ist, jedoch auch an einer anderen Stelle zwischen der Zuführeinrichtung 36 und der Werkstückspindel 16 liegen könnte. Auch läßt die Fig. 1 in der vorderen Stirnwand 44 des Gestells 40 eine Durchtrittsöffnung 152 erkennen, durch die sich die vom Aufnahmekasten 60 gehaltene Werkstoffstange 22 hindurchschieben läßt.

Im folgenden soll nun die Funktion der ersten Ausführungsform beschrieben werden, wobei eine Steuerung, die insbesondere dem Drehautomaten 10 und der Zuführeinrichtung 36 gemeinsam ist, weder dargestellt wurde noch beschrieben wird, da sich eine solche Steuerung, die den im folgenden erläuterten Funktionsablauf gewährleisten kann, von jedem Steuerungsfachmann ohne erfinderisches Zutun verwirklichen läßt.

Nachdem eine zuvor im Drehautomaten 10 abgearbeitete Werkstoffstange die Zuführeinrichtung 36 verlassen hat (der Aufnahmekasten 60 nimmt dabei seine in Fig. 1 dargestellte vordere Endstellung ein), weil sie durch die Vorschubzange 20 werkstückweise in Zufuhrrichtung F immer weiter vorgeschoben bzw. vorgezogen worden ist, meldet die Lichtschranke 150 an die Steuerung, daß diese Werkstoffstange die Zuführeinrichtung 36 verlassen hat, worauf die Steuerung den Ladevorgang startet.

Der Einschubzylinder 74 zieht dann zunächst den geschlossenen und noch verriegelten Aufnahmekasten 60 in seine hintere Endstellung (bei 60' - siehe Fig. 1) zurück, wobei die Verriegelungsstäbe 82a, 84a beim Einlaufen des Aufnahmekastens 60 in seine hintere, gemäß Fig. 1 linke Endstellung durch den Anschlag 86 relativ zum Aufnahmekasten nach rechts, d. h. nach vorn geschoben werden, und zwar so weit, daß ihre Stoßstellen zwischen die Scharnierelemente 82 und 84 zu liegen kommen und so der Aufnahmekasten 60 entriegelt wird.

Daraufhin zieht der Druckmittelzylinder 96 die Kolbenstange 96b ein (die Fig. 3 zeigt die Kolbenstange in ausgefahrenem Zustand), wodurch die obere Aufnahmerinne 64 und der obere Zangenschenkel 94a nach oben geschwenkt werden (gemäß den Figuren 2 und 3 im Gegenuhrzeigersinn um die Schwenkachse 68) und so der Aufnahmekasten 60 bzw. der Führungskanal 110' und die Durchtrittsöffnung 112' geöffnet werden.

Für das Folgende sei angenommen, daß die Rutsche 54 der Zuführeinrichtung 36 so mit neuen Werkstoffstangen 56a, 56b etc. beladen wurde, daß die gemäß Fig. 1 rechten Enden aller neuen Werkstoffstangen gegen die vordere Stirnwand 44 des Gestells 40 bzw. die vordere Stirnwand 54b der Rutsche 54 anliegen und sich infolgedessen unterschiedliche Werkstoffstangenlängen nur im gemäß Fig. 1 linken Bereich der Zuführeinrichtung 36 bemerkbar machen.

Nach dem Öffnen des sich in seiner hinteren, gemäß Fig. 1 linken Endstellung befindlichen Aufnahmekastens 60 heben die Hubzylinder 140 die vorderste Werkstoffstange 56a so weit an, wie dies die Fig. 2 zeigt; sie kann dann von selbst in den geöffneten Führungskanal 110' bzw. in die geöffnete Durchtrittsöffnung 112' der Klemmzange 94 rollen. Anschließend werden die Kolbenstangen der Hubzylinder 140 wieder abgesenkt, wodurch die nächste Werkstoffstange 56b in der Rutsche 54 jedoch nur so weit nach unten rollen kann, bis sie gegen den gemäß Fig. 2 linken Rand der Rutsche 54, welcher einen Anschlag 54c bildet, zur Anlage kommt, d. h. die Rutsche 54 bildet auch einen Anschlag für den auf der Rutsche 54 liegenden Werkstoffstangenvorrat.

Daraufhin schließt die Steuerung den Aufnahmekasten 60 und die Klemmzange 94, indem die Kolbenstange 96b des Druckmittelzylinders 96 wieder ausgefahren wird. Dank des Querspiels der beiden Koppelstangen 100, 102 in den Nuten 104, 106 der Klemmzange 94 ist dabei gewährleistet, daß nicht nur der Führungskanal 110' dicht geschlossen wird, sondern daß die Klemmzange 94 auch die neue Werkstoffstange 56a fest erfaßt.

In diesem Zustand ist die Zuführeinrichtung 36 bereit, die neue Werkstoffstange 56a in die Bearbeitungsstation der Werkzeugmaschine einzufahren, im dargestellten Beispiel also in die Werkstückspindel 16 des Drehautomaten 10. Dies geschieht, sobald der Rest der vorher abgearbeiteten Werkstoffstange, der sich noch in der Werkstückspindel 16 befindet, aufgebraucht ist, was der Steuerung z. B. durch die Vorschubzange 20 gemeldet werden kann; dieser Vorgang ist bei mit Stangenlademagazinen kombinierten Werkzeugmaschinen bekannt und braucht deshalb nicht weiter beschrieben zu werden.

Die Steuerung setzt nun die Werkstückspindel 16 still und öffnet deren Spannzange 18. Daraufhin bewegt der Einschubzylinder 74 den Aufnahmekasten 60 samt geschlossener Klemmzange 94 in Zufuhrrichtung F, so daß die neue Werkstoffstange 56a durch die Vorschubzange 20 hindurchgedrückt und durch die offene Spannzange 18 hindurch so weit vorgeschoben wird, bis ihr vorderes, gemäß Fig. 1 rechtes Ende in den Bereich des Drehwerkzeugs 26 kommt; dabei kann die neue Werkstoffstange einen noch in der Spannzange befindlichen Werkstoffstangenrest gemäß Fig. 1 nach rechts aus der Werkstückspindel 16 auswerfen. Kurz vor Erreichen der vorderen Endstellung des Aufnahmekastens 60 stößt der sich am rechten Ende des Aufnahmekastens befindende Verriegelungsstab 82a gegen den festen, vorderen Anschlag 88, so daß im weiteren Verlauf der Verschiebung des Aufnahmekastens 60 nach rechts die Verriegelungsstäbe 82a und 84a allesamt gegenüber dem Aufnahmekasten 60 nach links geschoben werden und ihre in Fig. 1 dargestellten Positionen einnehmen; dadurch werden die Aufnahmerinnen 62 und 64 wieder formschlüssig miteinander verriegelt.

Zuletzt veranlaßt die Steuerung den Druckmittelzylinder 96 (bei dem es sich natürlich um einen doppeltwirkenden Zylinder handeln muß), die Klemmzange 94 etwas zu öffnen, damit sie die neue Werkstoffstange 56a freigibt; dies ist dank des Querspiels der Koppelstangen 100 und 102 in den Nuten 104 und 106 möglich, ohne daß dabei der Führungskanal 110 geöffnet wird, was infolge der zuvor aktivierten Verriegelungsvorrichtung 80 auch gar nicht möglich wäre. Da sich nun die Materialstange im Führungskanal 110' frei drehen und in Längsrichtung verschieben läßt, kann der Drehautomat 10 mit dem Abarbeiten der neuen Werkstoffstange beginnen. Hierzu wird die Spannzange 18 geschlossen und zunächst einmal das noch rohe, vordere Ende der neuen Werkstoffstange mit dem Drehwerkzeug 26 plangedreht, nachdem die Werkstückspindel 16 in Drehung versetzt wurde.

Daraufhin arbeitet der Drehautomat 10 in herkömmlicher Weise, wobei die Werkstoffstange mit Hilfe der Vorschubzange 20 schrittweise, d. h. werkstückweise, gemäß Fig. 1 nach rechts vorgeschoben wird. Nachdem diese Werkstoffstange aufgebraucht worden ist, beginnt der zuvor beschriebene Zyklus erneut.

Damit sich für die Steuerung ein in sich geschlossener Signalzyklus ergibt, kann dieser so gestaltet werden, daß der Druckmittelzylinder 96 seine Kolbenstange 96b wieder voll ausfährt und die Klemmzange 94 schließt, nachdem der Steuerung durch die Lichtschranke 150 gemeldet wurde, daß die gerade in Bearbeitung befindliche Werkstoffstange die Zuführeinrichtung 36 verlassen hat.

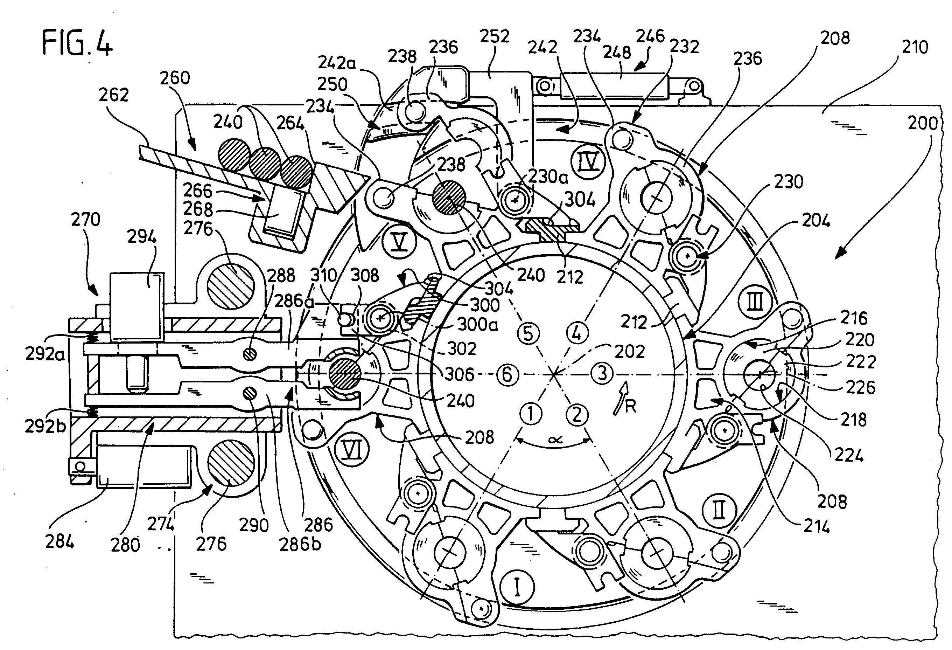

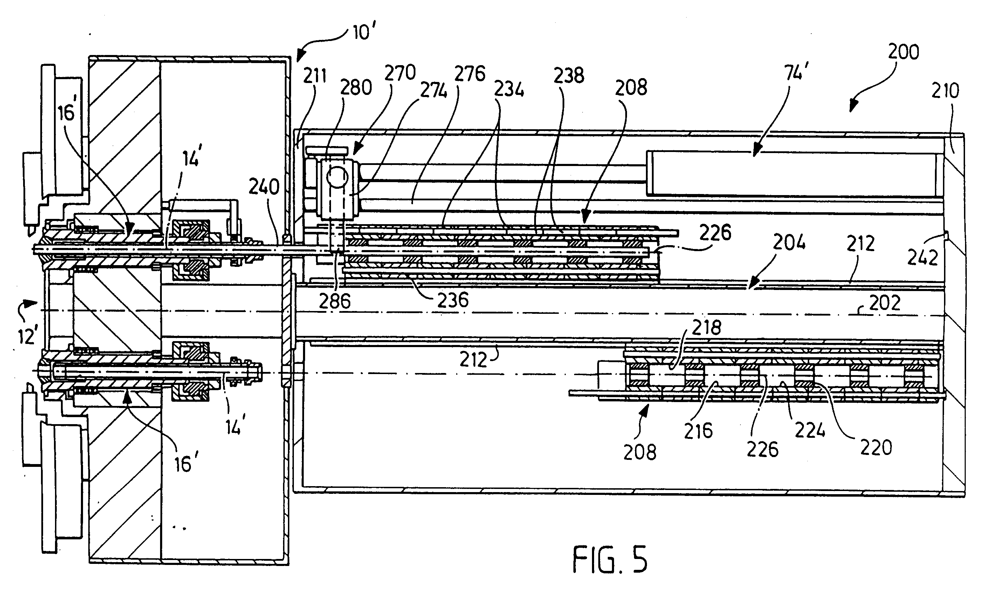

Die zweite, für einen Mehrspindel-Drehautomaten vorgesehene Ausführungsform der erfindungsgemäßen Werkstoffstangen-Zuführeinrichtung ist in den Figuren 4 und 5 nur insoweit dargestellt und wird im folgenden nur insoweit beschrieben, als dies für das Verständnis der Erfindung erforderlich ist, d. h. für das Verständnis derjenigen konstruktiven Änderungen und derjenigen Änderungen des Funktionsablaufs, welche sich für den Fall empfehlen, daß die erfindungsgemäße Werkstoffstangen-Zuführeinrichtung mit einem Mehrspindel-Drehautomaten kombiniert wird.

Die Fig. 4 zeigt eine erfindungsgemäße Werkstoffstangen-Zuführeinrichtung mit 6, jeweils einen Aufnahmekasten tragenden Stationen zur Verwendung mit einem 6 Werkstückspindeln aufweisenden Mehrspindel-Drehautomaten, jedoch liegt es auf der Hand, daß sich die erfindungsgemäße Zuführeinrichtung mit einer beliebigen Anzahl von Stationen verwirklichen läßt je nach Anzahl der Werkstückspindeln des Drehautomaten, mit dem die Zuführeinrichtung zusammenarbeiten soll.

Die Schnittebene des in Fig. 4 dargestellten Schnittes durch die als Ganzes mit 200 bezeichnete Werkstoffstangen-Zuführeinrichtung verläuft senkrecht zu einer Schaltachse 202, welche im Betrieb mit der Schaltachse der Arbeitsspindeltrommel des Mehrspindel-Drehautomaten fluchtet und um die ein trommelförmiger Werkstoffstangenträger im Takt der Drehschaltbewegungen der Arbeitsspindeltrommel des Drehautomaten gedreht werden kann, und zwar durch nicht dargestellte Antriebsmittel derart, daß dieser Werkstoffstangenträger synchron und in gleichen Drehwinkelschritten wie die Arbeitsspindeltrommel weitergeschaltet wird. Der bei 204 dargestellte trommelförmige Werkstoffstangenträger soll im weiteren als Magazintrommel bezeichnet werden.

Grundsätzlich könnte die erfindungsgemäße Werkstoffstangen-Zuführeinrichtung auch in den Mehrspindel-Drehautomaten integriert werden, wobei dann dessen Arbeitsspindeltrommel auch den Werkstoffstangenträger bzw. die Magazintrommel bilden könnte. Da die Arbeitsspindeltrommel eines modernen Mehrspindel-Drehautomaten jedoch außerordentlich stabil gebaut sein muß und wegen der von ihr getragenen Baugruppen auch verhältnismäßig schwer ist, wird das Bestreben, die rotatorisch weiterzuschaltende Masse möglichst klein zu halten, in der Regel dazu führen, daß die Werkstoffstangen-Zuführeinrichtung als gesondertes und vom Drehautomaten getrenntes Aggregat ausgebildet wird.

Die Magazintrommel 204 weist sechs Stationen I - VI auf, deren jede mit einem Aufnahmekasten 208 versehen ist. Diese Stationen sind drehwinkelmäßig äquidistant voneinander angeordnet, d. h. in Umfangsrichtung der Magazintrommel 204 mit jeweils gleichen Drehwinkelabständen α. Die Richtung, in der die Magazintrommel 204 - ebenso wie die Arbeitsspindeltrommel des Drehautomaten - rotatorisch weitergeschaltet wird, wurde mit dem Pfeil R angedeutet. Die Drehwinkelpositionen, die die verschiedenen Stationen I - VI im Zuge des Weiterschaltens der Magazintrommel 204 einnehmen, wurden mit den Bezugszeichen 1 - 6 bezeichnet.

Die Zuführeinrichtung 200 besitzt einen gestellartigen Rahmen mit zwei in Richtung der Schaltachse 202 im Abstand voneinander angeordneten Stirnwänden, an denen die Magazintrommel 204 um die Schaltachse 202 drehbar gelagert ist und von denen die Fig. 4 nur einen Teil einer Rückwand 210 erkennen läßt, bei der es sich um die vom Drehautomaten abgewandte hintere Stirnwand des gestellartigen Rahmens handeln soll, während in Fig. 5 auch eine vordere Stirnwand 211 dargestellt wurde.

Am Außenumfang der Magazintrommel 204 sind sechs Längsführungsschienen 212 befestigt, welche sich parallel zur Schaltachse 202 erstrecken und einen ungefähr T-förmigen Querschnitt haben. Jeweils zwei dieser Längsführungsschienen 212 dienen als Führungen für einen Fuß 214 einer unteren Aufnahmerinne 216 des Aufnahmekastens 208 der betreffenden Station, wobei dieser Aufnahmekasten durch eine obere Aufnahmerinne 218 vervollständigt wird. Die Aufnahmekästen 208 sind also zwischen dem Umfang der Magazintrommel 204 und zwischen jeweils zwei Längsführungsschienen 212 formschlüssig gehalten und in Richtung der Schaltachse 202 geführt, und zwar wie bei der ersten Ausführungsform zwischen einer vorderen Endstellung, in der der betreffende Aufnahmekasten 208 der Arbeitsspindeltrommel des Drehautomaten am nächsten ist, und einer hinteren Endstellung, in der der betreffende Aufnahmekasten der Rückwand 210 am nächsten ist. Die Fig. 4 zeigt auch, daß die Aufnahmekästen 208 wie die Aufnahmekästen 60 der ersten Ausführungsform mit Reduzierbuchsenelementen 220 und 222 versehen sind, so daß jeder Aufnahmekasten 208 einen sich in Richtung der Schaltachse 202 erstreckenden, vorn und hinten offenen und in seinem Querschnitt demjenigen der zu verarbeitenden Werkstoffstangen angepaßten Führungskanal 224 aufweist. Im Betrieb fluchten die Achsen 226 der Führungskanäle 224 mit den Achsen der Werkstückspindeln des Drehautomaten.

Die Beschreibung der sechs identisch gestalteten Aufnahmekästen 208 der zweiten Ausführungsform kann kurz gehalten werden, da diese Aufnahmekästen prinzipiell genauso gestaltet sind wie der Aufnahmekasten 60 der ersten Ausführungsform. Jeder der Aufnahmekästen 208 besitzt ein Scharnier 230, über das untere und obere Aufnahmerinne 216 bzw. 218 gelenkig miteinander verbunden sind, wobei die Scharnierachse parallel zur Schaltachse 202 verläuft. An ihren dem Scharnier 230 gegenüberliegenden Längsseiten sind die Aufnahmerinnen mit einer Scharnierband-artig ausgebildeten Verriegelungsvorrichtung 232 versehen, deren Scharnierelemente mit 234 und 236 bezeichnet wurden. In den Bohrungen dieser Scharnierelemente 234, 236 sind auch Verriegelungsstäbe verschiebbar geführt, die den Verriegelungsstäben 82a und 84a der ersten Ausführungsform entsprechen und in Fig. 4 allesamt mit dem Bezugszeichen 238 versehen wurden. Schließlich wurden die in Fig. 4 dargestellten Werkstoffstangen alle mit dem Bezugszeichen 240 bezeichnet.

Für die jeweils der Rückwand 210 zugewandten Verriegelungsstäbe 238 bildet diese Rückwand eine Führung und einen axialen Anschlag in Form einer zur Schaltachse 202 konzentrischen Ring- bzw. Führungsnut 242, in die der hinterste Verriegelungsstab 238 eines seine hintere Endstellung einnehmenden Aufnahmekastens 208 eingreift. Der Boden oder Grund der Führungsnut 242 tritt an die Stelle des Anschlags 86 der ersten Ausführungsform, und durch die Führungsnut 242 wird ein seine hintere Endstellung einnehmender Aufnahmekasten 208, dessen Verriegelungsvorrichtung 232 ja dann entriegelt ist, am Aufklappen gehindert, wenn die Magazintrommel 204 weitergeschaltet wird. Die der Rückwand 210 gegenüberliegende vordere Stirnwand 211 der Zuführeinrichtung 202 bedarf einer solchen Führungsnut nicht, sie bildet vielmehr lediglich einen dem Anschlag 88 der ersten Ausführungsform entsprechenden festen Anschlag, durch den die Verriegelungsvorrichtung 232 eines Aufnahmekastens 208 verriegelt wird, wenn der letztere in seine vordere Endstellung einläuft - hierfür ist es natürlich erforderlich, daß jeder Satz von Verriegelungsstäben 238 dann, wenn die Verriegelungsvorrichtung 232 gelöst ist, in derselben Weise nach vorn über den ihm zugeordneten Aufnahmekasten 208 übersteht, wie dies bei der ersten Ausführungsform nach den Figuren 1 - 3 der Fall ist.

Die Zuführeinrichtung 200 hat nun für alle Aufnahmekästen 208 nur eine einzige Betätigungsvorrichtung 246 zum Öffnen und Schließen der Aufnahmekästen bzw. der Führungskanäle 224. Diese Betätigungsvorrichtung 246 ist fest der Position 5 zugeordnet und sie umfaßt einen Druckmittelzylinder 248, ein Führungssegment 250 und einen Schwenkhebel 252. Der wie üblich aus einem Zylindergehäuse und einer Kolbenstange bestehende Druckmittelzylinder 248 ist einerseits an der Rückwand 210 und andererseits am Schwenkhebel 252 angelenkt, wobei die Gelenkachsen parallel zur Schaltachse 202 verlaufen. Der Schwenkhebel 252 ist gleichfalls an der Rückwand 210 angelenkt und so um eine Achse schwenkbar, die mit der Schwenkachse 230a des Scharniers 230 eines sich gerade in Position 5 befindlichen Aufnahmekastens 208 fluchtet. Das am Schwenkhebel 252 befestigte Führungssegment 250 enthält einen Teil 242a der Führungsnut 242, und die Betätigungsvorrichtung 246 ist so gestaltet, daß bei eingezogener Kolbenstange des Druckmittelzylinders 248 die Teile der Betätigungsvorrichtung die in Fig. 4 dargestellte Position einnehmen, während sich durch Ausfahren der Kolbenstange des Druckmittelzylinders 248 der Schwenkhebel 252 samt Führungssegment 250 gemäß Fig. 4 im Gegenuhrzeigersinn um die Schwenkachse 230a so schwenken läßt, daß der Führungsnutteil 242a die Führungsnut 242 zur Ringnut vervollständigt.

Wenn nun ein Aufnahmekasten 208 in seine hintere Endstellung gefahren wird, so daß sein hinterster Verriegelungsstab 238 in die Führungsnut 242 einläuft und auf diese Weise die Verriegelungsvorrichtung 232 dieses Aufnahmekastens 208 entriegelt wird, und nachdem dieser Aufnahmekasten 208 in die Position 5 gebracht worden ist, kann dieser Aufnahmekasten mit Hilfe der Betätigungsvorrichtung 246 aufgeklappt werden, so daß er sich in dem in Fig. 4 dargestellten Zustand befindet. In diesem Zusammenhang sei schon hier bemerkt, daß ein in die Position 5 geschalteter Aufnahmekasten 208 keine Werkstoffstange 240 enthält, vielmehr nach dem Aufklappen des Aufnahmekastens in Position 5 mit einer neuen Werkstoffstange beladen wird.

Zu diesem Zweck ist der Position 5 ein Werkstoffstangenmagazin 260 zugeordnet, welches z. B. an der Rückwand 210 und an der dieser gegenüberliegenden vorderen Stirnwand der Zuführeinrichtung 200 befestigt ist. Das Magazin 260 besitzt eine Rutsche 262 als Vorratsfläche für einen Satz neuer Werkstoffstangen 240, wobei die Oberseite der Rutsche 262 auf einem solchen Niveau angeordnet und derart gemäß Fig. 4 nach rechts geneigt ist, daß diese Werkstoffstangen, deren Längsachsen parallel zur Schaltachse 202 verlaufen, die Tendenz haben, die Rutsche in Richtung auf den sich in Position 5 befindlichen Aufnahmekasten 208 herunterzurollen. Am vorderen, gemäß Fig. 4 rechten Ende der Rutsche 262 hat das Magazin 260 einen Anschlag 264 für die jeweils vorderste Werkstoffstange 240, unter der das Magazin mit einem Satz von in Richtung der Schaltachse 202 hintereinander und im Abstand voneinander angeordneten Hubzylindern 266 versehen ist, durch deren Kolben 268 sich die neuen Werkstoffstangen 240 vereinzeln lassen und sich die jeweils vorderste Werkstoffstange 240 über den Anschlag 264 hinwegheben läßt, so daß sie in den offenen Führungskanal 224 des sich in Position 5 befindlichen Aufnahmekastens 208 rollen kann. Die Fig. 4 zeigt den Zustand der Zuführeinrichtung 200, nachdem gerade eine neue Werkstoffstange 240 in den aufgeklappten, sich in Position 5 befindlichen Aufnahmekasten 208 gerollt ist, die Kolben 268 jedoch bereits wieder ihre unteren Endstellungen einnehmen.

Daraufhin schließt die Betätigungsvorrichtung 246 den sich in Position 5 befindlichen Aufnahmekasten 208 durch Ausfahren der Kolbenstange des Druckmittelzylinders 248.

Nach dem Weiterschalten des gerade mit einer neuen Werkstoffstange 240 beladenen Aufnahmekastens 208 von der Position 5 in die Position 6 wird dieser Aufnahmekasten in der Position 6 durch eine als Ganzes mit 270 bezeichnete Einschubvorrichtung nach vorn in seine vordere Endstellung geschoben, und zwar zusammen mit der neuen Werkstoffstange 240, und beim Einlaufen dieses Aufnahmekastens in die vordere Endstellung wird, wie dies bereits beschrieben wurde, dessen Verriegelungsvorrichtung 232 wieder verriegelt, weil sein vorderster Verriegelungsstab 238 gegen die der Rückwand 210 gegenüberliegende vordere Stirnwand 211 der Zuführeinrichtung 200 anschlägt und relativ zum Aufnahmekasten nach hinten geschoben wird.

Die Einschubvorrichtung 270 hat einen äußeren Z-Schlitten 274, welcher durch zwei Führungsstangen 276 gehalten und in Richtung der Z-Achse, d. h. in Richtung der Schaltachse 202 verschiebbar geführt wird. Die beiden Führungsstangen 276, die parallel zueinander und parallel zur Schaltachse 202 verlaufen sollen, können an der Rückwand 210 und an der dieser gegenüberliegenden vorderen Stirnwand 211 der Zuführeinrichtung 200 befestigt sein und es kann ein dem Einschubzylinder 74 der ersten Ausführungsform nach den Figuren 1 - 3 entsprechender Hydraulikzylinder 74' (siehe Fig. 5) vorgesehen sein, um den Z-Schlitten 274 in Richtung der Schaltachse 202 hin- und herzuschieben; bei den Stangen 276 kann es sich aber auch um die Kolbenstangen zweier parallel zueinander angeordneter und synchron betätigter Druckmittelzylinder handeln, die den Z-Schlitten 274 halten und an einer oder beiden Stirnwänden der Zuführeinrichtung 200 befestigt sein können. Im Z-Schlitten 274 ist ein schlittenförmiger Rahmen 280 in einer zur Schaltachse 202 radialen Richtung verschiebbar geführt, und zwar in der der Position 6 zugeordneten radialen Richtung - die Einschubvorrichtung 270, die für alle Aufnahmekästen 208 nur einmal vorhanden ist, ist also der Position 6 zugeordnet.

Die Fig. 4 zeigt den Rahmen 208 in seiner auf die Schaltachse 202 bezogen radial inneren Endstellung, aus der er mit Hilfe eines am Z-Schlitten 274 angebrachten Druckmittelzylinders 284 gemäß Fig. 4 nach links in eine radial äußere Endstellung verschoben werden kann. Am Rahmen 280 ist eine Klemmzange 286 angebracht; diese hat zwei Zangenschenkel 286a und 286b, welche als um Gelenkachsen 288 und 290 schwenkbare doppelarmige Hebel ausgebildet sind. Die Gelenkachsen 288 und 290 erstrecken sich parallel zur Schaltachse 202 und sind am Rahmen 280 befestigt. Die gemäß Fig. 4 linken Enden der Zangenschenkel 286a und 286b werden von Druckfedern 292a und 292b beaufschlagt, welche sich andererseits am Rahmen 280 abstützen und demnach bestrebt sind, die Klemmzange 286 zu öffnen - die Fig. 4 zeigt die Klemmzange im geöffneten Zustand, in dem sie sich in radialer Richtung über eine Werkstoffstange 240 schieben läßt, die sich im Führungskanal 224 des sich in Position 6 befindlichen Aufnahmekastens 208 befindet. Schließlich besitzt die Einschubvorrichtung 270 noch einen Druckmittelzylinder 294, welcher wie der Druckmittelzylinder 96 der ersten Ausführungsform dazu dient, die Klemmzange 286 zu schließen, so daß sie die Werkstoffstange 240 des sich in Position 6 befindlichen Aufnahmekastens 208 fest erfaßt. Das Zylindergehäuse des Druckmittelzylinders 294 ist am oberen Zangenschenkel 286a befestigt, während seine Kolbenstange gegen den unteren Zangenschenkel 286b anliegt.

Damit die Einschubvorrichtung 270 einen sich in Position 6 befindlichen Aufnahmekasten 208 senkrecht zur Zeichnungsebene der Fig. 4, d. h. in Richtung der Schaltachse 202, in die vordere Endstellung vorschieben und in die hintere Endstellung zurückziehen kann, ist an jedem Aufnahmekasten 208 ein doppelarmiger Riegelhebel 300 angelenkt, dessen Schwenkachse 300a gleichfalls parallel zur Schaltachse 202 verläuft und der am Fuß 214 bzw. an der unteren Aufnahmerinne 216 des Aufnahmekastens axial unverschieblich gehalten ist. Er steht unter dem Einfluß einer die Schwenkachse 300a umfassenden Wickelfeder 302, welche den Riegelhebel 300 gemäß Fig. 4 im Uhrzeigersinn zu verschwenken versucht, so daß der Riegelhebel normalerweise gegen die ihm benachbarte Längsführungsschiene 212 anliegt. Diese Längsführungsschienen haben den vorderen und hinteren Endstellungen der Aufnahmekästen 208 zugeordnete Rastnuten 304, von denen die Fig. 4 nur die der jeweils vorderen Endstellung der Aufnahmekästen 208 zugeordneten Rastnuten erkennen läßt. Das radial nach außen weisende Ende eines jeden Riegelhebels 300 bildet eine Koppelgabel 306 mit zwei in Richtung der Schaltachse 202 hintereinander liegenden Schenkeln, deren jeder mit einer Nut 308 versehen ist. Beim Vorfahren der Klemmzange 286 in ihre in Fig. 4 dargestellte vordere oder radial innere Endstellung wird ein vom oberen Zangenschenkel 286a getragener und sich in axialer Richtung erstreckender Koppelstift 310 in die Nuten 308 eingefahren, wobei das radial innere Ende des oberen Zangenschenkels 286a zwischen die beiden Schenkel der Koppelgabel 306 desjenigen Aufnahmekastens 208 eingeschoben wird, welcher sich in Position 6 befindet. Beim Schließen der Klemmzange 286 mit Hilfe des Druckmittelzylinders 294 wird also der Riegelhebel 300 des sich in Position 6 befindlichen Aufnahmekastens 208 entgegen der Wirkung der Wickelfeder 302 im Gegenuhrzeigersinn verschwenkt, so daß er aus der betreffenden Rastnut 304 ausgehoben wird und sich infolgedessen dieser Aufnahmekasten in Richtung der Schaltachse 202 verschieben läßt. Beim Vorfahren der Klemmzange 286 in ihre in Fig. 4 dargestellte Position wird die Klemmzange aber auch in axialer Richtung, d. h. in Richtung der Schaltachse 202, mit dem sich in Position 6 befindlichen Aufnahmekasten 208 gekoppelt, und zwar in beiden axialen Richtungen, so daß sich ein in Position 6 befindlicher Aufnahmekasten 208 mit Hilfe der Einschubvorrichtung 270 sowohl vorschieben, als auch zurückziehen läßt.

Die Funktion der in den Figuren 4 und 5 dargestellten zweiten Ausführungsform der erfindungsgemäßen Werkstoffstangen-Zuführeinrichtung 200 ist im übrigen die folgende:

Die Fig. 4 zeigt denjenigen Zustand der Zuführeinrichtung 200, welcher gegeben ist, nachdem die dem Mehrspindel-Drehautomaten und der Zuführeinrichtung 200 gemeinsame Steuerung das Signal erhalten hat, daß eine Werkstückspindel der Arbeitsspindeltrommel des Drehautomaten mit einer neuen Werkstoffstange nachgeladen werden kann, weil die zuvor abgearbeitete Werkstoffstange aufgebraucht worden ist. Des weiteren sei für die Fig. 4 angenommen, daß der der neu zu beladenden Werkstückspindel zugeordnete Aufnahmekasten 208 durch den Hydraulikzylinder 74' bereits in seine hintere Endstellung zurückgezogen und entriegelt worden ist. Gegebenenfalls nach einigen Leertakten, in denen die Magazintrommel 204 in Richtung R weitergeschaltet wird, ohne daß der betreffende Aufnahmekasten 208 eine Werkstoffstange enthält, wird dieser Aufnahmekasten in Position 5 mit Hilfe der Betätigungsvorrichtung 246 geöffnet und durch das Magazin 260 mit einer neuen Werkstoffstange 240 beladen, worauf der Aufnahmekasten in Position 5 wieder geschlossen wird. Nach dem Weiterschalten der Magazintrommel 204 um einen Schaltschritt befindet sich der betrachtete Aufnahmekasten 208 in Position 6, jedoch nimmt er immer noch seine hintere, der Rückwand 210 benachbarte Endstellung ein. Die Einschubvorrichtung 270, die während des Weiterschaltens der Magazintrommel 204 ihre radial äußere Endstellung eingenommen hat, wird nun mit Hilfe des Druckmittelzylinders 284 radial in ihre innere Endstellung vorgeschoben, nachdem sie gegebenenfalls zuvor auf den Führungsstangen 276 in ihre hintere, der Rückwand 210 benachbarte Endstellung verschoben worden ist. Das radiale Vorschieben der Einschubvorrichtung 270 in die in Fig. 4 dargestellte vordere oder innere Endstellung erfolgt dabei bei geöffneter Klemmzange 286, so daß diese über die neue Werkstoffstange 240 geschoben werden kann. In diesem Zusammenhang sei darauf hingewiesen, daß sich in diesem Moment die Klemmzange 286 ebenso wie die Klemmzange 94 der ersten Ausführungsform in axialer Richtung vor oder hinter dem betrachteten Aufnahmekasten 208 befinden soll, vorzugsweise unmittelbar vor dem vorderen Ende dieses Aufnahmekastens.

An dieser Stelle sei darauf hingewiesen, daß bei der zweiten Ausführungsform nach Fig. 4 zwei Betätigungsvorrichtungen vorgesehen sind, deren eine dem Öffnen und Schließen der Aufnahmekästen und deren andere der Betätigung der Klemmzange dient, während bei der ersten Ausführungsform nach den Figuren 1 - 3 ein und dieselbe Betätigungsvorrichtung, nämlich der Druckmittelzylinder 96 samt Koppelstangen 100, 102 sowohl den Aufnahmekasten 60, als auch die Klemmzange 94 öffnet und schließt. Für Ausführungsformen, die mit einem Mehrspindel-Drehautomaten zusammenarbeiten sollen, empfehlen sich zwei Betätigungsvorrichtungen deshalb, weil sich dadurch die produktionsunwirksamen Nebenzeiten verkürzen lassen, indem in einer Position des zu betrachtenden Aufnahmekastens dieser aufgeschwenkt, beladen und wieder geschlossen wird, und indem ferner in der nächsten oder einer der nächsten Positionen das Erfassen der neuen Werkstoffstange durch die Klemmvorrichtung sowie das Verschieben des Aufnahmekastens erfolgen.

Nachdem die Klemmzange 286 ihre in Fig. 4 dargestellte innere Endposition erreicht hat, wird sie mit Hilfe des Druckmittelzylinders 294 geschlossen und so die neue Werkstoffstange 240 in der Klemmzange gespannt. Daraufhin wird die Einschubvorrichtung 270 durch den Hydraulikzylinder 74' nach vorn geschoben, wobei sie über die Klemmzange 286 den sich in Position 6 befindenden Aufnahmekasten 208 und die von diesem aufgenommene neue Werkstoffstange 240 mitnimmt, bis der Aufnahmekasten seine vordere Endstellung erreicht hat und durch die Verriegelungsstäbe 238 wieder verriegelt wurde. Daraufhin wird der Druckmittelzylinder 294 umgesteuert, so daß die Klemmzange 286 die neue Werkstoffstange 240 freigibt. Beim Vorschieben des Aufnahmekastens 208 und der neuen Werkstoffstange 240 wird letztere in die neu zu beladende Werkstückspindel des Drehautomaten eingeschoben, so daß nach dem Spannen der Werkstoffstange in dieser Werkstückspindel das werkstückweise Abarbeiten der neuen Werkstoffstange beginnen kann.

Bei der Ausführungsform nach Fig. 4 enthalten also die Magazintrommel 204 und die mit ihr um die Schaltachse 202 zu drehenden Baugruppen keinerlei aktive Elemente, da alle Antriebe, wie die verschiedenen Druckmittelzylinder, außerhalb der Bewegungsbahnen der sich mit der Magazintrommel 204 drehenden Baugruppen angeordnet sind bzw. angeordnet werden können. Allerdings wird während einer Umdrehung der Arbeitsspindeltrommel des Drehautomaten über 360° mit der nachzuladenden Werkstückspindel kein Werkstück produziert.

Die Fig. 5 zeigt außer der Werkstoffstangen-Zuführeinrichtung 200 nur noch die für das Verständnis der Erfindung wesentlichen Teile eines Mehrspindel-Drehautomaten 10', nämlich eine um die Schaltachse 202 taktweise weiterschaltbare, d. h. drehbare Arbeitsspindeltrommel 12' mit sechs Werkstückspindeln 16', von denen in Fig. 5 nur zwei dargestellt sind. Die Drehachsen 14' der Werkstückspindeln 16' fluchten stets mit den Achsen 226 der Führungskanäle 224 der Zuführeinrichtung 200.

Wesentliche Merkmale der für einen Mehrspindel-Drehautomaten geeigneten erfindungsgemäßen Werkstoffstangen-Zuführeinrichtung sind also ferner die folgenden: keine aktiven Elemente, wie Antriebe und Sensoren, an der Magazintrommel bzw. an den Aufnahmekästen. Der Vorgang des Beladens eines Aufnahmekastens mit einer neuen Werkstoffstange ist auf mehrere Schaltpositionen der Magazintrommel bzw. der Arbeitsspindeltrommel aufgeteilt (so wird bei dem gezeichneten Ausführungsbeispiel in Position 5 ein Aufnahmekasten mit einer neuen Werkstoffstange beladen, in Position 6 kann ein inzwischen leerer Aufnahmekasten in seine hintere Endstellung gefahren werden, in der er beim Drehen der Magazintrommel 204 schließlich nach Position 5 gelangt, und in Position 6 wird ein mit einer neuen Werkstoffstange beladener Aufnahmekasten zusammen mit der Werkstoffstange in seine vordere Endstellung gefahren). Es ist nur eine einzige Klemmvorrichtung vorgesehen, die insbesondere mit einer einzigen Einschubvorrichtung kombiniert ist. Besondere Vorteile bringt es mit sich, wenn die Klemmvorrichtung drei Bewegungen durchführen kann (in radialer Richtung vor und zurück, in axialer Richtung vor und zurück sowie Öffnen bzw. Schließen). Eine Kuppelvorrichtung zwischen Klemmvorrichtung und Aufnahmekästen ermöglicht das Verschieben der Aufnahmekästen sowie deren Verriegelung und Entriegelung. Schließlich sind Mittel vorgesehen, welche ein Aufklappen entriegelter Aufnahmekästen beim Weiterschalten der Magazintrommel verhindern.

## Patentansprüche

1. Automatische Einrichtung für das Zuführen von stangenförmigem Werkstoff in Längsrichtung einer Werkstoffstange zu einer Bearbeitungsstation einer Werkzeugmaschine, insbesondere für Drehautomaten, mit einem von einem Gestell getragenen und sich in Zufuhrrichtung erstreckenden länglichen Aufnahme- und Führungskasten, welcher einen sich gleichfalls in Zufuhrrichtung erstreckenden, mindestens an dem der Bearbeitungsstation zugewandten Ende des Aufnahmekastens offenen Aufnahme- und Führungskanal zum Aufnehmen einer neuen Werkstoffstange sowie zum Führen derselben in Zufuhrrichtung während des werkstückweisen Abarbeitens der Werkstoffstange durch die Werkzeugmaschine aufweist sowie von wenigstens zwei, an ihren einander zugewandten Seiten im Querschnitt schalenförmig gestalteten Aufnahmerinnen gebildet wird und so in seiner Längsrichtung geteilt ist, mit einer Betätigungsvorrichtung zum Öffnen und Schliessen des Aufnahmekastens durch Bewegen mindestens einer Aufnahmerinne quer zur Zufuhrrichtung derart, daß bei geöffnetem Aufnahmekasten diesem in Richtung quer zu seiner Längsrichtung eine neue Werkstoffstange zuführbar ist, sowie mit einer Einschubvorrichtung zum Einschieben einer neuen Werkstoffstange in Zufuhrrichtung in die Werkzeugmaschine, **dadurch gekennzeichnet**, daß dem Aufnahmekasten (60; 208) eine gesteuert schließ- und öffenbare Klemmvorrichtung (90; 286, 294) zum Festlegen einer neuen Werkstoffstange (22; 240) im Aufnahmekasten zugeordnet und der letztere am Gestell (40; 204) in Zufuhrrichtung (F) verschiebbar geführt und durch die Einschubvorrichtung (74; 270) in Zufuhrrichtung hin- und herschiebbar ist.

2. Einrichtung nach Anspruch 1, dadurch gekennzeichnet, daß der Durchmesser des Kanals (110) des Aufnahmekastens (60; 208) dem größten, auf der Werkzeugmaschine (10) verarbeitbaren Werkstoffstangendurchmesser entspricht und daß der Kanal mit Haltevorrichtungen (122, 124) für austauschbare, in die Aufnahmerinnen (62, 64; 216, 218) einlegbare, gleichfalls rinnenförmige Reduzierbuchsenelemente (114, 116; 220, 222) ausgestattet ist, wobei jeder Satz von Reduzierbuchsenelementen einen Innendurchmesser definiert, welcher dem Durchmesser der zu verarbeitenden Werkstoffstange (22; 240) entspricht.

3. Einrichtung nach Anspruch 1 oder 2, dadurch gekennzeichnet, daß der Aufnahmekasten (60; 208) zwischen einer festen vorderen, der Werkzeugmaschine (10) zugewandten Endstellung und einer festen hinteren Endstellung, in welcher eine neue Werkstoffstange (56a; 240) in den Aufnahmekasten einführbar ist, verschiebbar ist.

4. Einrichtung nach Anspruch 3, dadurch gekennzeichnet, daß den Aufnahmerinnen (62, 64; 216, 218) wenigstens ein Verriegelungselement (82, 84, 82a, 84a; 234, 236, 238) zum Geschlossenhalten des Aufnahmekastens (60; 208) zugeordnet ist und daß die Einrichtung mit der vorderen und hinteren Endstellung zugeordneten vorderen und hinteren Betätigungselementen (88, 86; 210, 242) für das Verriegelungselement versehen ist derart, daß die Aufnahmerinnen bei Erreichen der vorderen Endstellung selbsttätig aneinander verriegelt und bei Erreichen der hinteren Endstellung selbsttätig entriegelt werden.

5. Einrichtung nach einem oder mehreren der vorstehenden Ansprüche, dadurch gekennzeichnet, daß der Aufnahmekasten (60; 208) von zwei Aufnahmerinnen (62, 64; 216, 218) gebildet wird, welche an ihren einen Längsseiten über ein Scharnier (66; 230) mit sich in Längsrichtung des Aufnahmekastens erstreckender Gelenkachse (68; 230a) gelenkig miteinander verbunden sind.

6. Einrichtung nach den Ansprüchen 4 und 5, dadurch gekennzeichnet, daß die Aufnahmerinnen (62, 64; 216, 218) an ihren dem Scharnier (66; 230) gegenüberliegenden Längsseiten mit einer Scharnierband-artigen Verriegelungsvorrichtung (80; 232) mit sich in Längsrichtung des Aufnahmekastens (60; 208) erstreckender Achse versehen sind, daß mehrere in Längsrichtung abstandslos hintereinander angeordnete, stabförmige Verriegelungselemente (82a, 84a; 238) vorgesehen sind, wobei jedem Scharnierband-Element (82, 84; 234, 236) der Verriegelungsvorrichtung (80; 232) ein in diesem längsverschiebbares Verriegelungselement (82a bzw. 84a; 238) zugeordnet ist, und daß die Betätigungselemente für die Verriegelungsvorrichtung als feste, in Längsrichtung auf die endständigen Verriegelungselemente (82a; 238) einwirkende Anschläge (86, 88; 210, 242) ausgebildet sind derart, daß die Stoßstellen der Verriegelungselemente (82a, 84a; 238) in der hinteren Endstellung des Aufnahmekastens (60; 208) zwischen den Scharnierband-Elementen (82, 84; 234, 236) und in der vorderen Endstellung innerhalb der Scharnierband-Elemente liegen.

7. Einrichtung nach einem oder mehreren der vorstehenden Ansprüche, gekennzeichnet durch ein neben dem Aufnahmekasten (60; 208) anordenbares Werkstoffstangen-Magazin (54; 260), welches eine geneigte, in Richtung auf den Aufnahmekasten (60; 208 in Position 5) abfallende Rutsche (54a; 262) zum Tragen mehrerer nebeneinander angeordneter und parallel zur Zufuhrrichtung (F) orientierter Werkstoffstangen (56b - 56f; 240) aufweist, sowie durch eine Beladevorrichtung (140; 266) zum Einladen der dem Aufnahmekasten jeweils nächsten Werkstoffstange aus der Rutsche in den geöffneten Aufnahmekasten.

8. Einrichtung nach Anspruch 7, gekennzeichnet durch einen Werkstoffstangenanschlag (54c; 264), welcher dem dem Aufnahmekasten (60; 208 in Position 5) zugewandten unteren Längsrand der Rutsche (54a; 262) zugeordnet ist, sowie durch wenigstens ein Hubelement (140; 268) zum Anheben nur der jeweils nächsten Werkstoffstange (56a; 240) über diesen Anschlag hinweg in den geöffneten Aufnahmekasten (60; 208 in Position 5).

9. Einrichtung nach Anspruch 8, dadurch gekennzeichnet, daß das Hubelement (140; 268) eine geneigte und in Richtung auf den Aufnahmekasten (60; 208 in Position 5) abfallende Tragfläche (142) für die jeweils nächste Werkstoffstange (56a; 240) besitzt, welche sich in der unteren Ruhestellung des Hubelements höchstens auf dem Niveau des unteren Längsrandes der Rutsche (54a; 262) und in der oberen Endstellung des Hubelements auf einem solchen Niveau befindet, daß eine sich auf dieser Tragfläche befindliche Werkstoffstange (56a; 240) von selbst in den geöffneten Aufnahmekasten (60; 208 in Position 5) rollt und/oder gleitet.

10. Einrichtung nach Anspruch 3 sowie einem oder mehreren der Ansprüche 7 - 9, dadurch gekennzeichnet, daß der in Zufuhrrichtung (F) vordere Rand (44) der Rutsche (54; 262), welcher insbesondere einen Anschlag für die vorderen Werkstoffstangenenden bildet, vom vorderen Ende des sich in seiner hinteren Endstellung befindlichen Aufnahmekastens (60; 208 in Position 5), in Zufuhrrichtung (F) gemessen, einen Abstand aufweist, welcher dem für ein Einführen einer neuen Werkstoffstange (22; 240) in die Bearbeitungsstation (16) der Werkzeugmaschine (10) durch Vorschieben des Aufnahmekastens (60; 208) in seine vordere Endstellung erforderlichen Überstand der Werkstoffstange über das vordere Ende des Aufnahmekastens entspricht.

11. Einrichtung nach einem oder mehreren der vorstehenden Ansprüche, dadurch gekennzeichnet, daß die Klemmvorrichtung (90; 286) vor dem Aufnahmekasten (60; 208 in Position 6) angeordnet ist.

12. Einrichtung nach einem oder mehreren der vorstehenden Ansprüche, dadurch gekennzeichnet, daß die Klemmvorrichtung als Klemmzange (94; 286) ausgebildet ist.

13. Einrichtung nach einem oder mehreren der vorstehenden Ansprüche, dadurch gekennzeichnet, daß die Klemmvorrichtung (90; 286) zusammen mit dem Aufnahmekasten (60; 208 in Position 6) hin- und herschiebbar ist.

14. Einrichtung nach den Ansprüchen 5, 12 und 13, dadurch gekennzeichnet, daß die Gelenkachse (68) der um letztere schwenkbaren Zangenschenkel (94a, 94b) der Klemmzange (94) mit derjenigen des die Aufnahmerinnen (62, 64) verbindenden Scharniers (66) fluchtet.

15. Einrichtung nach Anspruch 14, dadurch gekennzeichnet, daß eine Gelenkstange (66a) des Scharniers (66) der Aufnahmerinnen (62, 64) die Klemmzange (94) trägt und deren Gelenkachse (68) bildet.

16. Einrichtung nach einem oder mehreren der Ansprüche 13 - 15, dadurch gekennzeichnet, daß die Klemmvorrichtung (90) durch die Betätigungsvorrichtung (96) zum Öffnen und Schließen des Aufnahmekastens (60) betätigbar ist.

17. Einrichtung nach den Ansprüchen 12 und 16, dadurch gekennzeichnet, daß jeder der Zangenschenkel (94a, 94b) der Klemmzange (94) mit einer der Aufnahmerinnen (62, 64) über eine in beiden Schwenkrichtungen spielbehaftete mechanische Kuppelvorrichtung (100, 102, 104, 106) gekoppelt ist.

18. Einrichtung nach den Ansprüchen 16 und 17, dadurch gekennzeichnet, daß die Betätigungsvorrichtung (96) an der Klemmzange (94) angreift.

19. Einrichtung nach Anspruch 18, dadurch gekennzeichnet, daß die Betätigungsvorrichtung ein von der Klemmzange (94) getragener Druckmittelzylinder (96) ist, dessen Kolbenstange (96b) mit dem einen Zangenschenkel (94b) und dessen Zylinder (96a) mit dem anderen Zangenschenkel (94a) gelenkig verbunden ist.

20. Einrichtung nach einem oder mehreren der Ansprüche 1 - 13 für einen Mehrspindel-Drehautomaten, der eine um eine zentrale Schaltachse drehbare, mehrere zur Schaltachse parallele Werkstückspindeln tragende Arbeitsspindeltrommel aufweist, welche durch Drehen um die Schaltachse in eine der Zahl der Werkstückspindeln entsprechende Anzahl von Schaltpositionen einstellbar ist, **dadurch gekennzeichnet**, daß ein das Gestell bildender, zusammen mit den Werkstückspindeln um die Schaltachse (202) drehbarer Werkstoffstangenträger (204) für jede Werkstückspindel einen Aufnahmekasten (208) trägt, dessen Kanal (224) mit der ihm zugeordneten Werkstückspindel fluchtet.

21. Einrichtung nach Anspruch 20, dadurch gekennzeichnet, daß die Arbeitsspindeltrommel den Werkstoffstangenträger (204) bildet.

22. Einrichtung nach Anspruch 20 oder 21, dadurch gekennzeichnet, daß nur eine einzige, vom Werkstoffstangenträger (204) getrennte Betätigungsvorrichtung (246) zum Öffnen und Schließen aller Aufnahmekästen (208) vorgesehen und einer ersten Aufnahmekasten-Position (Position 5) zugeordnet ist, welche einer der Schaltpositionen entspricht.

23. Einrichtung nach den Ansprüchen 7 und 22, dadurch gekennzeichnet, daß nur ein einziges, vom Werkstoffstangenträger (204) getrenntes Werkstoffstangen-Magazin (260) vorgesehen und der ersten Aufnahmekasten-Position (Position 5) zugeordnet ist.

24. Einrichtung nach einem oder mehreren der Ansprüche 20 - 23, dadurch gekennzeichnet, daß nur eine einzige, vom Werkstoffstangenträger (204) getrennte Klemmvorrichtung (286) vorgesehen und einer Aufnahmekasten-Position (Position 6) zugeordnet ist, welche einer der Schaltpositionen entspricht.

25. Einrichtung nach Anspruch 24, dadurch gekennzeichnet, daß die Klemmvorrichtung (286) der in Schaltrichtung (R) der Arbeitsspindeltrommel auf die erste Aufnahmekasten-Position (Position 5) folgenden zweiten Aufnahmekasten-Position (Position 6) zugeordnet ist.

26. Einrichtung nach Anspruch 24 oder 25, dadurch gekennzeichnet, daß nur eine einzige, vom Werkstoffstangenträger (204) getrennte und nacheinander mit jedem der Aufnahmekästen (208) in Richtung der Schaltachse (202) kuppelbare Einschubvorrichtung (270) vorgesehen und der der Klemmvorrichtung (286) zugeordneten Aufnahmekasten-Position (Position 6) zugeordnet ist.

27. Einrichtung nach einem oder mehreren der Ansprüche 22 - 26, dadurch gekennzeichnet, daß die Betätigungsvorrichtung (246) außerhalb der Bewegungsbahnen der mit dem Werkstoffstangenträger (204) um die Schaltachse (202) drehbaren Teile (208) angeordnet bzw. anordenbar ist.

28. Einrichtung nach einem oder mehreren der Ansprüche 23 - 27, dadurch gekennzeichnet, daß das Werkstoffstangen-Magazin (260) außerhalb der Bewegungsbahnen der mit dem Werkstoffstangenträger (204) um die Schaltachse (202) drehbaren Teile (208) angeordnet bzw. anordenbar ist.

29. Einrichtung nach einem oder mehreren der Ansprüche 26 - 28, dadurch gekennzeichnet, daß die Einschubvorrichtung (270) außerhalb der Bewegungsbahnen der mit dem Werkstoffstangenträger (204) um die Schaltachse (202) drehbaren Teile (208) angeordnet bzw. anordenbar ist.

30. Einrichtung nach einem oder mehreren der Ansprüche 24 - 29, dadurch gekennzeichnet, daß die Klemmvorrichtung (286) außerhalb der Bewegungsbahnen der mit dem Werkstoffstangenträger (204) um die Schaltachse (202) drehbaren Teile (208) angeordnet bzw. anordenbar ist.

31. Einrichtung nach den Ansprüchen 12 und 30, dadurch gekennzeichnet, daß die Zangenschenkel (286a, 286b) der geöffneten Klemmzange (286) quer zur Schaltachse (202) über eine von einem Aufnahmekasten (208 in Position 6) gehaltene Werkstoffstange (240) vorschiebbar sind.

32. Einrichtung nach Anspruch 13 sowie einem oder mehreren der Ansprüche 26 - 31, dadurch gekennzeichnet, daß die Klemmvorrichtung (286) durch die Einschubvorrichtung (270) in Richtung der Schaltachse (202) hin- und herschiebbar ist.

33. Einrichtung nach einem oder mehreren der Ansprüche 20 - 32, dadurch gekennzeichnet, daß an jedem der Aufnahmekästen (208) ein Riegel (300) vorgesehen ist, für welchen der Werkstoffstangenträger (204) mit einer vorderen, der vorderen Endstellung des betreffenden Aufnahmekastens (208) sowie einer hinteren, der hinteren Endstellung dieses Aufnahmekastens zugeordneten Rast (304) versehen ist, und daß der Riegel (300) durch die Klemmvorrichtung (286) bzw. die Einschubvorrichtung (270) und insbesondere durch einen der Zangenschenkel (286a, 286b) betätigbar ist.

34. Einrichtung nach Anspruch 6 sowie einem oder mehreren der Ansprüche 20 - 33, dadurch gekennzeichnet, daß der der hinteren Endstellung der Aufnahmekästen (208) zugeordnete Anschlag (210, 242) mit einer zur Schaltachse (202) konzentrischen Führung (242) für die Verriegelungselemente (238) versehen ist.

35. Einrichtung nach Anspruch 34, dadurch gekennzeichnet, daß der Anschlag als zur Schaltachse (202) konzentrische und die Führung bildende Ringnut (242) ausgebildet ist, welche sich in Zufuhrrichtung öffnet und in die das hintere Verriegelungselement (238) eines seine hintere Endstellung einnehmenden Aufnahmekastens (208) eingreift.

36. Einrichtung nach Anspruch 22 sowie Anspruch 34 oder 35, dadurch gekennzeichnet, daß die Führung (242) im Bereich der ersten Aufnahmekasten-Position (Position 5) ein im Sinne eines Öffnens und Schließens des sich in dieser Position befindlichen Aufnahmekastens (208) bewegliches Führungssegment (250) aufweist, welches Bestandteil der Betätigungsvorrichtung (246) ist.

37. Einrichtung nach Anspruch 36, dadurch gekennzeichnet, daß das Führungssegment (250) schwenkbar angebracht und mit einem Antrieb (248) versehen ist.

## Claims

1. Automatic apparatus for feeding bar-shaped stock in the longitudinal direction of a stock bar to a machining station of a machine tool, in particular for automatic lathes, comprising an elongated receiving and guiding box supported by a frame and extending in the feed direction, said box having a receiving and guiding passage for receiving a new stock bar and for guiding the same in the feed direction in the course of the workpiece-wise machining of the stock bar by the machine tool, said passage likewise extending in the feed direction and being open at least at the end of the receiving box facing the machining station, and said box being formed by at least two receiving channels shaped like shells in cross section at their sides facing one another and thus being divided in its longitudinal direction, further comprising an actuating device for opening and closing the receiving box by moving at least one receiving channel transversely to the feed direction such that when the receiving box is open a new stock bar is feedable to it in a direction transverse to its longitudinal direction, and a pushing-in device for pushing a new stock bar in the feed direction into the machine tool, characterized in that a controllably closable and openable clamping device (90; 286, 294) is associated with the receiving box (60; 208) for securing a new stock bar (22; 240) in place in the receiving box and the latter is guided on the frame (40; 204) for movement in the feed direction (F) and is movable back and forth in the feed direction by the pushing-in device (74; 270).

2. Apparatus as defined in claim 1, characterized in that the diameter of the passage (110) of the receiving box (60; 208) corresponds to the largest stock bar diameter machinable on the machine tool (10), and in that the passage is equipped with holding devices (122, 124) for interchangeable reducing bushing elements (114, 116; 220, 222) which are insertable into the receiving channels (62, 64; 216, 218) and are likewise channel-shaped, each set of reducing bushing elements defining an inside diameter corresponding to the diameter of the stock bar (22; 240) to be machined.

3. Apparatus as defined in claim 1 or 2, characterized in that the receiving box (60; 208) is movable between a stationary front end position facing the machine tool (10) and a stationary rear end position, a new stock bar (56a; 240) being insertable into the receiving box in said rear end position.

4. Apparatus as defined in claim 3, characterized in that at least one locking element (82, 84, 82a, 84a; 234, 236, 238) is associated with the receiving channels (62, 64; 216, 218) for keeping the receiving box (60; 208) closed, and in that the apparatus is provided with front and rear actuating elements (88, 86; 210, 242) for the locking element which are associated with the front and rear end positions such that the receiving channels are automatically locked against one another when the front end position is reached and automatically unlocked when the rear end position is reached.

5. Apparatus as defined in any one or several of the preceding claims, characterized in that the receiving box (60; 208) is formed by two receiving channels (62, 64; 216, 218) articulatedly connected to one another at longitudinal sides thereof by a hinge joint (66; 230) having a joint axis (68; 230a) extending in the longitudinal direction of the receiving box.

6. Apparatus as defined in claims 4 and 5, characterized in that the receiving channels (62, 64; 216, 218) are provided at longitudinal sides thereof located opposite the binge joint (66; 230) with a hinge frame-type locking device (80; 232) having an axis extending in the longitudinal direction of the receiving box (60; 208), in that several rod-like locking elements (82a, 84a; 238) arranged one after the other in the longitudinal direction without spacing are provided, each hinge frame element (82, 84; 234, 236) of the locking device (80; 232) having associated with it a locking element (82a and 84a, respectively; 238) longitudinally movable therein, and in that the actuating elements for the locking device are designed as stationary stops (86, 88; 210; 242) acting in the longitudinal direction on the terminal locking elements (82a; 238) such that the contact points of the locking elements (82a, 84a; 238) are located between the hinge frame elements (82, 84; 234, 236) in the rear end position of the receiving box (60; 208) and within the hinge frame elements in the front end position.

7. Apparatus as defined in any one or several of the preceding claims, characterized by a stock bar magazine (54; 260) adapted to be arranged adjacent to the receiving box (60; 208) and having an inclined slide (54a; 262) sloping downwards in the direction towards the receiving box (60; 208 in position 5) for supporting a plurality of stock bars (56b - 56f; 240) arranged next to one another and oriented parallel to the feed direction (F), and by a loading device (140; 266) for loading the stock bar nearest to the receiving box from the slide into the open receiving box.

8. Apparatus as defined in claim 7, characterized by a stock bar stop (54c; 264) associated with the lower longitudinal edge of the slide (54a; 262) facing the receiving box (60; 208 in position 5), and by at least one lifting element (140; 268) for lifting only the nearest stock bar (56a; 240) over this stop into the open receiving box (60; 208 in position 5).

9. Apparatus as defined in claim 8, characterized in that the lifting element (140; 268) has an inclined supporting surface (142) sloping downwards in the direction towards the receiving box (60; 208 in position 5) for the nearest stock bar (56a; 240), said supporting surface being located at the most at the level of the lower longitudinal edge of the slide (54a; 262) in the lower inoperative position of the lifting element, and in the upper end position of the lifting element at a level such that a stock bar (56a; 240) located on this supporting surface rolls and/or slides by itself into the open receiving box (60; 208 in position 5).

10. Apparatus as defined in claim 3 and in any one or several of claims 7 to 9, characterized in that the front edge (44) of the slide (54; 262) in the feed direction (F), forming, in particular, a stop for the front stock bar ends, is spaced from the front end of the receiving box (60; 208 in position 5) located in its rear end position by a distance, measured in the feed direction (F), corresponding to the length of the stock bar projecting beyond the front end of the receiving box, said projecting length being necessary for inserting a new stock bar (22; 240) into the machining station (16) of the machine tool (10) by advancing the receiving box (60; 208) into its front end position.

11. Apparatus as defined in any one or several of the preceding claims, characterized in that the clamping device (90; 286) is arranged in front of the receiving box (60; 208 in position 6).

12. Apparatus as defined in any one or several of the preceding claims, characterized in that the clamping device is designed as a clamping claw (94; 286).

13. Apparatus as defined in any one or several of the preceding claims, characterized in that the clamping device (90; 286) is displaceable back and forth together with the receiving box (60; 208 in position 6).

14. Apparatus as defined in claims 5, 12 and 13, characterized in that the joint axis (68) of the claw arms (94a, 94b) of the clamping claw (94) which are pivotable about said joint axis is aligned with that of the hinge joint (66) connecting the receiving channels (62, 64).

15. Apparatus as defined in claim 14, characterized in that a link rod (66a) of the hinge joint (66) of the receiving channels (62, 64) supports the clamping claw (94) and forms the joint axis (68) thereof.

16. Apparatus as defined in any one or several of claims 13 to 15, characterized in that the clamping device (90) is actuatable by the actuating device (96) for opening and closing the receiving box (60).

17. Apparatus as defined in claims 12 and 16, characterized in that each of the claw arms (94a, 94b) of the clamping claw (94) is coupled to one of the receiving channels (62, 64) by a mechanical coupling device (100, 102, 104, 106) having play in both pivot directions.

18. Apparatus as defined in claims 16 and 17, characterized in that the actuating device (96) engages on the clamping claw (94).

19. Apparatus as defined in claim 18, characterized in that the actuating device is a pressure-medium cylinder (96) carried by the clamping claw (94), its piston rod (96b) being articulatedly connected to the one claw arm (94b) and its cylinder (96a) to the other claw arm (94a).

20. Apparatus as defined in any one or several of claims 1 to 13 for a multiple spindle automatic lathe having a work spindle drum rotatable about a central indexing axis and carrying a plurality of workpiece spindles parallel to the indexing axis, said drum being adjustable by rotation about the indexing axis into a number of indexing positions corresponding to the number of workpiece spindles, characterized in that a stock bar carrier (204) forming the frame and being rotatable about the indexing axis (202) together with the workpiece spindles carries for each workpiece spindle a receiving box (208) having a passage (224) aligned with the workpiece spindle associated with it.

21. Apparatus as defined in claim 20, characterized in that the work spindle drum forms the stock bar carrier (204).

22. Apparatus as defined in claim 20 or 21, characterized in that only a single actuating device (246) separate from the stock bar carrier (204) is provided for opening and closing all of the receiving boxes (208) and is associated with a first receiving box position (position 5) corresponding to one of the indexing positions.

23. Apparatus as defined in claims 7 and 22, characterized in that only a single stock bar magazine (260) separate from the stock bar carrier (204) is provided and associated with the first receiving box position (position 5).

24. Apparatus as defined in any one or several of claims 20 to 23, characterized in that only a single clamping device (286) separate from the stock bar carrier (204) is provided and associated with a receiving box position (position 6) corresponding to one of the indexing positions.

25. Apparatus as defined in claim 24, characterized in that the clamping device (286) is associated with the second receiving box position (position 6) following the first receiving box position (position 5) in the indexing direction (R) of the work spindle drum.

26. Apparatus as defined in claim 24 or 25, characterized in that only a single pushing-in device (270) separate from the stock bar carrier (204) and adapted for coupling with each of the receiving boxes (208) one after the other in the direction of the indexing axis (202) is provided and associated with the receiving box position (position 6) associated with the clamping device (286).

27. Apparatus as defined in any one or several of claims 22 to 26, characterized in that the actuating device (246) is arranged or adapted to be arranged outside the paths of movement of the parts (208) rotatable with the stock bar carrier (204) about the indexing axis (202).

28. Apparatus as defined in any one or several of claims 23 to 27, characterized in that the stock bar magazine (260) is arranged or adapted to be arranged outside the paths of movement of the parts (208) rotatable with the stock bar carrier (204) about the indexing axis (202).

29. Apparatus as defined in any one or several of claims 26 to 28, characterized in that the pushing-in device (270) is arranged or adapted to be arranged outside the paths of movement of the parts (208) rotatable with the stock bar carrier (204) about the indexing axis (202).

30. Apparatus as defined in any one or several of claims 24 to 29, characterized in that the clamping device (286) is arranged or adapted to be arranged outside the paths of movement of the parts (208) rotatable with the stock bar carrier (204) about the indexing axis (202).

31. Apparatus as defined in claims 12 and 30, characterized in that the claw arms (286a, 286b) of the opened clamping claw (286) are adapted to be pushed forwards transversely to the indexing axis (202) over a stock bar (240) held by a receiving box (208 in position 6).

32. Apparatus as defined in claim 13 and in any one or several of claims 26 to 31, characterized in that the clamping device (286) is displaceable back and forth in the direction of the indexing axis (202) by the pushing-in device (270).

33. Apparatus as defined in any one or several of claims 20 to 32, characterized in that a docking means (300) is provided at each of the receiving boxes (208), the stock bar carrier (204) being provided with a front detent means (304) associated with the front end position of the respective receiving box (208) and with a rear detent means (304) associated with the rear end position of this receiving box for said locking means, and in that the locking means (300) is actuatable by the clamping device (286) or the pushing-in device (270) and, in particular, by one of the claw arms (286a, 286b).

34. Apparatus as defined in claim 6 and any one or several of claims 20 to 23, characterized in that the stop (210, 242) associated with the rear end position of the receiving boxes (208) is provided with a guide means (242) for the locking elements (238) which is concentric with the indexing axis (202).

35. Apparatus as defined in claim 34, characterized in that the stop is an annular groove (242) concentric with the indexing axis (202) and forming the guide means, said annular groove opening in the feed direction and being engaged by the rear locking element (238) of a receiving box (208) taking up its rear end position.

36. Apparatus as defined in claim 22 and claim 34 or 35, characterized in that the guide means (242) has in the area of the first receiving box position (position 5) a guide segment (250) movable for opening and closing the receiving box (208) located in this position, said guide segment being part of the actuating device (246).

37. Apparatus as defined in claim 36, characterized in that the guide segment (250) is pivotably mounted and provided with a drive (248).

## Revendications

1. Dispositif automatique pour l'amenée de matière en forme de barre en direction longitudinale d'une barre de matière à une station d'usinage d'une machine-outil, en particulier d'un tour automatique, comportant un caisson de logement et de guidage oblong supporté par un bâti et s'étendant en direction d'amenée, qui comporte un canal de logement et de guidage s'étendant également en direction d'amenée et ouvert au moins à l'extrémité du caisson de logement orientée vers la station d'usinage, pour recevoir une nouvelle barre de matière ainsi que pour guider celle-ci en direction d'amenée pendant l'usinage par pièce de la barre de matière par la machine-outil, et qui est formé par au moins deux rainures de logement de section transversale en forme de coque et qui est ainsi divisé dans sa direction longitudinale, comportant un dispositif d'actionnement pour ouvrir et fermer le caisson de logement par déplacement d'au moins une rainure de logement transversalement à la direction d'amenée, de telle sorte que lorsque le caisson de logement est ouvert, une nouvelle barre de matière peut être amenée à celui-ci en direction transversalement à sa direction longitudinale, et comportant un dispositif d'introduction pour introduire une nouvelle barre de matière en direction d'amenée dans la machine-outil, caractérisé en ce qu'au caisson de logement (60 ; 208) est associé un dispositif de coincement (90 ; 286, 294) susceptible d'être ouvert et fermé de façon commandée, pour fixer une nouvelle barre de matière (22 ; 240) dans le caisson de logement, et en ce que ce dernier est guidé de façon mobile en direction d'amenée (F) sur le bâti (40 ; 204) et est mobile en va-et-vient en direction d'amenée par le dispositif d'introduction (74 ; 270).

2. Dispositif selon la revendication 1, caractérisé en ce que le diamètre du canal (110) du caisson de logement (60 ; 208) correspond du moins au diamètre de barre de matière maximum à usiner sur la machine-outil (10), et en ce que le canal est équipé de dispositifs de retenue (122, 124) pour des éléments de douille de réduction (114, 116 ; 220, 222) interchangeables, susceptibles d'être posés dans les rainures de logement (62, 64 ; 216, 218) et réalisés également en forme de rainure, chaque lot d'éléments de douille de réduction définissant un diamètre intérieur qui correspond au diamètre de la barre de matière (22 ; 240) à usiner.

3. Dispositif selon l'une ou l'autre des revendications 1 et 2, caractérisé en ce que le caisson de logement (60 ; 208) est mobile entre une position de fin de course avant fixe orientée vers la machine-outil (10) et une position de fin de course arrière fixe dans laquelle une nouvelle barre de matière (56a ; 240) est introduite dans le caisson de logement.

4. Dispositif selon la revendication 3, caractérisé en ce qu'aux rainures de logement (62, 64 ; 216, 218) est associé au moins un élément de verrouillage (82, 84, 82a, 84a ; 234, 236, 238) pour maintenir fermé le caisson de logement (60 ; 208), et en ce que le dispositif est pourvu d'éléments d'actionnement avant et arrière (88, 86 ; 210, 242) associés aux positions de fin de course avant et arrière du caisson de logement pour l'élément de verrouillage, de telle sorte que les rainures de logement sont verrouillées automatiquement l'une contre l'autre lorsque la position de fin de course avant est atteinte et qu'elles sont automatiquement déverrouillées lorsque la position de fin de course arrière est atteinte.

5. Dispositif selon l'une ou plusieurs des revendications précédentes, caractérisé en ce que le caisson de logement (60 ; 208) est formé par deux rainures de logement (62, 64 ; 216, 218) qui sont reliées avec articulation l'une à l'autre au niveau des uns de leurs côtés longitudinaux par l'intermédiaire d'une charnière (66 ; 230) dont l'axe d'articulation (68 ; 230a) s'étend en direction longitudinale du canal de guidage.

6. Dispositif selon les revendications 4 et 5, caractérisé en ce que les rainures de logement (62, 64 ; 216, 218) sont pourvues, au niveau de leurs côtés longitudinaux opposés à la charnière (66 ; 230), d'un dispositif de verrouillage (80 ; 232) similaire à une bande de charnière dont l'axe s'étend en direction longitudinale du caisson de logement (60 ; 208), en ce qu'il est prévu plusieurs éléments de verrouillage (82a, 84a ; 238) en forme de tige agencés sans écart les uns derrière les autres en direction longitudinale, à chaque élément de bande de charnière (82, 84a ; 234, 236) du dispositif de verrouillage (80 ; 232) étant associé un élément de verrouillage (82a ou 84a ; 238) longitudinalement mobile dans celui-ci, et en ce que les éléments d'actionnement pour le dispositif de verrouillage sont réalisés sous forme de butées fixes (86, 88 ; 210, 242) agissant en direction longitudinale sur les éléments de verrouillage (82a ; 238) côté fin de course, de telle sorte que les emplacements de jointure des éléments de verrouillage (82a, 84a ; 238) se trouvent entre les éléments de bande de charnière (82, 84 ; 234, 236) dans la position de fin de course arrière du caisson de logement (60 ; 208), et à l'intérieur des éléments de bande de charnière dans la position de fin de course avant.

7. Dispositif selon l'une ou plusieurs des revendications précédentes, caractérisé par un embarreur (54 ; 260) qui est susceptible d'être agencé à côté du caisson de logement (60 ; 208) et qui comporte une goulotte (54a ; 262) inclinée et descendant en direction du caisson de logement (60 ; 208 dans la position 5) pour supporter plusieurs barres de matière (56b à 56f ; 240) agencées les unes à côté des autres et orientées parallèlement à la direction d'amenée (F), ainsi que par un dispositif de chargement (140 ; 266) pour charger la barre de matière respectivement la plus proche du caisson de logement depuis la goulotte jusque dans le caisson de logement ouvert.

8. Dispositif selon la revendication 7, caractérisé par une butée de barre de matière (54c ; 264) qui est associée à la bordure longitudinale inférieure, orientée vers le caisson de logement (60 ; 208 dans la position 5), de la goulotte (54a ; 262), ainsi que par au moins un élément de levage (140 ; 268) pour soulever uniquement la barre de matière respective suivante (56a ; 240) au-delà de cette butée jusque dans le caisson de logement ouvert (60 ; 208 dans la position 5).

9. Dispositif selon la revendication 8, caractérisé en ce que l'élément de levage (140 ; 268) possède une surface de support (142) inclinée et descendant en direction du caisson de logement (60 ; 208 dans la position 5) pour la barre de matière respective suivante (56a ; 240), et que cette surface de support se trouve, dans la position de repos inférieure de l'élément de levage, tout au plus au niveau de la bordure longitudinale inférieure de la goulotte (54a ; 262) et dans la position de fin de course supérieure de l'élément de levage, à un niveau tel qu'une barre de matière (56a ; 240) située sur cette surface de support roule et/ou glisse d'elle-même dans le caisson de logement ouvert (60 ; 208 dans la position 5).

10. Dispositif selon la revendication 3 et selon l'une ou plusieurs des revendications 7 à 9, caractérisé en ce que le bord avant (44) en direction d'amenée (F) de la goulotte (54 ; 262), qui forme en particulier une butée pour les extrémités avant des barres de matière, présente une distance, mesurée en direction d'amenée (F) par rapport à l'extrémité avant du caisson de logement (60 ; 208 dans la position 5) situé dans sa position de fin de course arrière, telle qu'elle correspond au porte-à-faux de la barre de matière au-delà de l'extrémité avant du caisson de logement, le porte-à-faux étant nécessaire pour introduire une nouvelle barre de matière (22 ; 240) dans la station d'usinage (16) de la machine-outil (10) par avance du caisson de logement (60 ; 208) jusque dans sa position de fin de course avant.

11. Dispositif selon l'une ou plusieurs des revendications précédentes, caractérisé en ce que le dispositif de coincement (90 ; 286) est agencé en avant du caisson de logement (60 ; 208 dans la position 6).

12. Dispositif selon l'une ou plusieurs des revendications précédents, caractérisé en ce que le dispositif de coincement est réalisé sous forme d'une pince de coincement (94 ; 286).

13. Dispositif selon l'une ou plusieurs des revendications précédents, caractérisé en ce que le dispositif de coincement (90 ; 286) est mobile en va-et-vient conjointement avec le caisson de logement (60 ; 208 dans la position 6).

14. Dispositif selon les revendications 5, 12 et 13, caractérisé en ce que l'axe d'articulation (68) des bras de pince (94a, 94b) de la pince de coincement (94) en basculement autour de ce dernier est en alignement avec celui de la charnière (66) reliant les rainures de logement (62, 64).

15. Dispositif selon la revendication 14, caractérisé en ce qu'une tige d'articulation (66a) de la charnière (66) des rainures de logement (62, 64) porte la pince de coincement (94) et forme son axe d'articulation (68).

16. Dispositif selon l'une ou plusieurs des revendications 13 à 15, caractérisé en ce que le dispositif de coincement (90) est susceptible d'être actionné par le dispositif d'actionnement (96) pour ouvrir et fermer le caisson de logement (60).

17. Dispositif selon les revendications 12 et 16, caractérisé en ce que chaque bras (94a, 94b) de la pince de coincement (94) est accouplé à l'une des rainures de logement (62, 64) par l'intermédiaire d'un dispositif d'accouplement mécanique (100, 102, 104, 106) présentant un jeu dans les deux directions de basculement.

18. Dispositif selon les revendications 16 et 17, caractérisé en ce que le dispositif d'actionnement (96) attaque la pince de coincement (94).

19. Dispositif selon la revendication 18, caractérisé en ce que le dispositif d'actionnement est un cylindre à fluide sous pression (96) supporté par la pince de coincement (94), dont la tige de piston (96b) est reliée en articulation à l'un des bras de pince (94b) et dont le cylindre (96a) est relié en articulation à l'autre bras de pince (94a).

20. Dispositif selon l'une ou plusieurs des revendications 1 à 13 pour un tour automatique à plusieurs broches qui comporte un tambour porte-broche de travail en rotation autour d'un axe de transfert central et supportant plusieurs broches porte-pièce parallèles à l'axe de transfert, ledit tambour étant réglable parmi un nombre de positions de transfert correspondant au nombre des broches porte-pièce par rotation autour de l'axe de transfert, caractérisé en ce qu'un support de barre de matière (204) formant le bâti et étant en rotation conjointement avec les broches porte-pièce autour de l'axe de transfert (202) porte pour chaque broche porte-pièce un caisson de logement (208) dont le canal (224) est en alignement avec la broche porte-pièce qui lui est associée.

21. Dispositif selon la revendication 20, caractérisé en ce que le tambour porte-broche de travail forme le support de barre de matière (204).

22. Dispositif selon l'une ou l'autre des revendications 20 et 21, caractérisé en ce qu'il est prévu un seul dispositif d'actionnement (246) qui est séparé du support de barre de matière (204) pour ouvrir et fermer tous les caissons de logement (208) et qui est associé à une première position de caisson de logement (position 5) qui correspond à l'une des positions de transfert.

23. Dispositif selon les revendications 7 et 22, caractérisé en ce qu'il est prévu un seul embarreur (260) qui est séparé du support de barre de matière (204) et qui est associé à la première position de caisson de logement (position 5).

24. Dispositif selon l'une ou plusieurs des revendications 20 à 23, caractérisé en ce qu'il est prévu un seul dispositif de coincement (286) qui est déparé du support de barre de matière (204) et qui est associé à une position de caisson de logement (position 6) qui correspond à l'une des positions de transfert.

25. Dispositif selon la revendication 24, caractérisé en ce que le dispositif de coincement (286) est associé à la seconde position de caisson de logement (position 6) qui suit la première position de caisson de logement (position 5) en direction de transfert (R) du tambour porte-broche de travail.

26. Dispositif selon l'une ou l'autre des revendications 24 et 25, caractérisé en ce qu'il est prévu un seul dispositif d'introduction (270) qui est séparé du support de barre de matière (204) et qui est susceptible d'être accouplé successivement avec chacun des caissons de logement (208) en direction de l'axe de transfert, et qui est associé à la position de caisson de logement (position 6) associée au dispositif de coincement (286).

27. Dispositif selon l'une ou plusieurs des revendications 22 à 26, caractérisé en ce que le dispositif d'actionnement (246) est agencé ou susceptible d'être agencé à l'extérieur des voies de déplacement des pièces (208) en rotation avec le support de barre de matière (204) autour de l'axe de transfert (202).

28. Dispositif selon l'une ou plusieurs des revendications 23 à 27, caractérisé en ce que l'embarreur (260) est agencé ou susceptible d'être agencé à l'extérieur des voies de déplacement des pièces (208) en rotation avec le support de barre de matière (204) autour de l'axe de transfert (202).

29. Dispositif selon l'une ou plusieurs des revendications 26 à 28, caractérisé en ce que le dispositif d'introduction (270) est agencé ou susceptible d'être agencé à l'extérieur des voies de déplacement des pièces (208) en rotation avec le support de barre de matière (204) autour de l'axe de transfert (202).

30. Dispositif selon l'une ou plusieurs des revendications 24 à 29, caractérisé en ce que le dispositif de coincement (286) est agencé ou susceptible d'être agencé à l'extérieur des voies de déplacement des pièces (208) en rotation avec le support de barre de matière (204) autour de l'axe de transfert (202).

31. Dispositif selon les revendications 12 et 30, caractérisé en ce que les bras (286a, 286b) de la pince de coincement ouverte (286) sont mobiles transversalement à l'axe de transfert (202) par l'intermédiaire d'une barre de matière (240) retenue par le caisson de logement (208 dans la position 6).

32. Dispositif selon la revendication 13 ainsi que selon l'une ou plusieurs des revendications 26 à 31, caractérisé en ce que le dispositif de coincement (286) est mobile en va-et-vient en direction de l'axe de transfert (202) par l'intermédiaire du dispositif d'introduction (270).

33. Dispositif selon l'une ou plusieurs des revendications 20 à 32, caractérisé qu'il est prévu sur chacun des caissons de logement (208) un verrou (300) pour lequel le support de barre de matière (204) est pourvu d'un enclenchement (304) avant associé à la position de fin de course avant du caisson de logement correspondant (208) ainsi que d'un enclenchement (304) arrière associé à la position de fin de course arrière de ce caisson de logement, et en ce que le verrou (300) est susceptible d'être actionné par le dispositif de coincement (286) ou par le dispositif d'introduction (270) et en particulier par l'un des bras de pince (286a, 286b).

34. Dispositif selon la revendication 6 ainsi que selon l'une ou plusieurs des revendications 20 à 33, caractérisé en ce que la butée (210, 242) associée à la position de fin de course arrière des caissons de logement (208) est pourvue d'un guidage (242) concentrique à l'axe de transfert (202) pour les éléments de verrouillage (238).

35. Dispositif selon la revendication 34, caractérisé en ce que la butée est réalisée sous forme d'une gorge annulaire (242) concentrique à l'axe de transfert (202) et formant le guidage, qui s'ouvre en direction d'amenée et dans laquelle s'engage l'élément de verrouillage arrière (238) d'un caisson de logement (208) occupant sa position de fin de course arrière.

36. Dispositif selon la revendication 22 et l'une ou l'autre des revendications 34 et 35, caractérisé en ce que le guidage (242) dans la région de la première position de caisson de logement (position 5) comporte un segment de guidage (250) qui est mobile dans le sens d'une ouverture et d'une fermeture du caisson de logement (208) situé dans cette position, et qui fait partie du dispositif d'actionnement (246).

37. Dispositif selon la revendication 36, caractérisé en ce que le segment de guidage (250) est agencé en basculement et est pourvu d'un entraînement (248).
